(19) Europäisches Patentamt / European Patent Office / Office européen des brevets

(11) **EP 3 738 309 B1**

(12) **EUROPEAN PATENT SPECIFICATION**

(45) Date of publication and mention
of the grant of the patent:
**01.01.2025 Bulletin 2025/01**

(21) Application number: **18717746.4**

(22) Date of filing: **07.03.2018**

(51) International Patent Classification (IPC):
*H04N 19/129* (2014.01)    *H04N 19/61* (2014.01)
*H04N 19/18* (2014.01)    *H04N 19/48* (2014.01)
*H04N 19/467* (2014.01)

(52) Cooperative Patent Classification (CPC):
**H04N 19/129; H04N 19/18; H04N 19/467;
H04N 19/48; H04N 19/61**

(86) International application number:
**PCT/RU2018/000143**

(87) International publication number:
**WO 2019/172799 (12.09.2019 Gazette 2019/37)**

(54) **METHOD AND APPARATUS FOR DETECTING BLOCKS SUITABLE FOR MULTIPLE SIGN BIT HIDING**

VERFAHREN UND VORRICHTUNG ZUR ERKENNUNG VON BLÖCKEN, DIE ZUR MEHRFACHZEICHEN-BITUNTERDRÜCKUNG GEEIGNET SIND

PROCÉDÉ ET APPAREIL DE DÉTECTION DE BLOCS APPROPRIÉS POUR UN MASQUAGE DE BITS DE SIGNE MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2020 Bulletin 2020/47**

(73) Proprietor: HUAWEI TECHNOLOGIES CO., LTD.
**Shenzhen, Guangdong 518129 (CN)**

(72) Inventors:
• **RUFITSKIY, Vasily Alexeevich**
**Shenzhen, Guangdong 518129 (CN)**
• **FILIPPOV, Alexey Konstantinovich**
**Shenzhen, Guangdong 518129 (CN)**

(74) Representative: **Grünecker Patent- und
Rechtsanwälte
PartG mbB
Leopoldstraße 4
80802 München (DE)**

(56) References cited:
**US-A1- 2013 188 725**    **US-A1- 2014 003 530**

• **CLARE (ORANGE LABS) G ET AL: "Sign Data
Hiding", 7. JCT-VC MEETING; 98. MPEG
MEETING; 21-11-2011 - 30-11-2011; GENEVA;
(JOINT COLLABORATIVE TEAM ON VIDEO
CODING OF ISO/IEC JTC1/SC29/WG11 AND ITU-
T SG.16 ); URL: HTTP://WFTP3.ITU.
INT/AV-ARCH/JCTVC-SITE/,, no. JCTVC-G271, 8
November 2011 (2011-11-08), XP030110255**
• **YU X ET AL: "Multiple Sign Bits Hiding", 99.
MPEG MEETING; 6-2-2012 - 10-2-2012; SAN
JOSÉ; (MOTION PICTURE EXPERT GROUP OR
ISO/IEC JTC1/SC29/WG11),, no. m23359, 10
February 2012 (2012-02-10), XP030051884**

**Description**

Embodiments of the present invention relate to the field of picture processing such as still picture and/or video picture encoding and decoding.

BACKGROUND

Video coding (video encoding and decoding) is used in a wide range of digital video applications, for example broadcast digital TV, video transmission over internet and mobile networks, real-time conversational applications such as video chat, video conferencing, DVD and Blu-ray discs, video content acquisition and editing systems, and camcorders of security applications.

Since the development of the block-based hybrid video coding approach in the H.261 standard in 1990, new video coding techniques and tools were developed and formed the basis for new video coding standards. One of the goals of most of the video coding standards was to achieve a bitrate reduction compared to its predecessor without sacrificing picture quality. Further video coding standards comprise MPEG-1 video, MPEG-2 video, ITU-T H.262/MPEG-2, ITU-T H.263, ITU-T H.264/MPEG-4, Part 10, Advanced Video Coding (AVC), ITU-T H.265, High Efficiency Video Coding (HEVC), and extensions, e.g. scalability and/or three-dimensional (3D) extensions, of these standards.

US 2013/0188725 A1 describes methods of encoding and decoding for video data for encoding or decoding coefficients for a transform unit. The sign bits for the non-zero coefficients are encoded using sign bit hiding. Two or more sets of coefficients are defined for the transform unit and a sign bit may be hidden for each set, subject to satisfaction of a threshold test. The sets may correspond to coefficient groups that are otherwise used in multi-level significance map encoding and decoding.

G. CLARE (ORANGE LABS) ET AL, "Sign Data Hiding", 7. JCT-VC MEETING, no. JCTVC-G271, relates to a method to embed sign information into the residue. Specifically, the sign of a first non-null coefficient of a residual block is not always explicitly written in the bitstream. When decoding, the sign is directly inferred from the parity of the sum of quantized coefficients.

SUMMARY

Embodiments of the invention are defined by the features of the independent claims and further advantageous implementations of the embodiments by the features of the dependent claims.

According to an embodiment, an apparatus according to claim 1 is provided for encoding (embedding) a sign of a current transform coefficient of a signal comprising a processing circuitry which is configured to: determine whether or not the sign of the current transform coefficient is to be embedded in result of a first function of transform coefficients in a set of transform coefficients by evaluating a second function of the transform coefficient values in the set of transform coefficients and a number of those transform coefficients in the set of transform coefficients which are larger than a coefficient value threshold; and embed the sign of the current transform coefficient according to the result of the determination.

The above mentioned evaluation may provide an effective means to select a set of coefficients for which sign bit hiding (SBH) is to be applied resulting in acceptable distortion while still enabling hiding the sign in possibly large number of cases.

According to an embodiment, an apparatus according to claim 13 is provided for decoding (deriving) a sign of a current transform coefficient of a signal comprising a processing circuitry which is configured to: determine whether or not the sign of the current transform coefficient is to be derived from a value of a first function of transform coefficients in a set of transform coefficients by evaluating a second function of the transform coefficient values in the set of transform coefficients and a number of those transform coefficients in the set of transform coefficients which are larger than a coefficient value threshold; and derive the sign of the current transform coefficient according to the result of the determination.

This apparatus for decoding is suitable for deriving the sign embedded by the apparatus for embedding the sign as described above in any of the examples and embodiments. It is noted that the signs of the coefficients in the set of coefficients other than the current coefficients may have signs coded / decoded in another way such as entropy coding / decoding or the like.

The evaluating of the second function of the transform coefficient values in the set of transform coefficients includes (in an encoding and/or decoding apparatus) comparing the second function of said transform coefficient values with a second function threshold; and the evaluating of the number of those transform coefficients in the set of transform coefficients which are larger than the coefficient value threshold includes comparison of said number with a number threshold. This implementation provides for an easy and efficient condition testing.

Said evaluating is performed for a plurality of combinations of values of the second function threshold and the number thresholds; and the sign of the current transform coefficient is embedded in (or derived from) a result of the first function of the transform coefficients if the evaluating is successful for at least one of the plurality of combinations and not embedded in (or not derived from) the result of said first function of the transform coefficients otherwise. Provision of multiple threshold combinations enables to include more sets of coefficients among those for which the hiding is allowed and thus, may increase the coding efficiency by reducing the rate.

As an option, the plurality of combinations for non-decreasing values of the number threshold, the values of the second function threshold are not increasing.

In an exemplary implementation, the processing circuitry is further configured to access a memory in which the plurality of combinations of values of the second function threshold and the number thresholds are stored in lookup table. A look-up-table is an efficient and low-complexity mean to store the thresholds.

The processing circuitry may be configured to: split transform coefficients of a transform unit into a plurality of sets of transform coefficients; and perform the determination and the encoding (embedding) according to the result of said determination for each of the plurality of sets of transform coefficient values. Similarly, at the decoding apparatus, the determination on whether a sign is hidden and possible derivation of the sign of the current coefficient is performed for the respective sets of coefficients.

In particular, the transform unit is a two-dimensional block of transform coefficients obtained by transforming an image signal, and the processing circuitry is configured to split the transform unit into a plurality of two dimensional blocks and to perform the determination and the embedding of the sign of a current coefficient for each of the plurality of two dimensional blocks. In other words, for each block of coefficients a current coefficient is selected from among the block coefficients. This may be for instance always the first non-zero coefficient or the largest coefficient, or any other coefficient. Correspondingly, at the decoder side, for each block, sign of the current coefficient is derived.

For example, the processing circuitry of the sign encoding apparatus is further configured to: (i) quantize the transform coefficients of the block; (ii) scan the transform coefficients of a block among the plurality of two dimensional blocks according to a predefined order, (iii) determine a first non-zero coefficient in the scanned transform coefficients of said block, (iv) determine whether or not the sign of said first non-zero coefficient is to be encoded in a result of the first function of transform coefficients in the block by evaluating the second function of the transform coefficient values in the block and a number of non-zero transform coefficients in the block, and (v) embed the sign of the first non-zero coefficient according to the result of the determination.

For instance, the transform unit is a two-dimensional block of transform coefficients obtained by transforming the image signal, and the processing circuitry of the sign encoding apparatus is configured to scan transform coefficients of the transform unit according to a predefined order; and split the scanned transform coefficients into a plurality of one dimensional chunks and to perform the determination and the encoding for each of the plurality of one dimensional chunks. The processing circuitry of the sign decoding apparatus is correspondingly configured to (i) determine whether the sign of the current coefficient is hidden for each of a plurality of one dimensional chunks of coefficient values (e.g. decoded from the bitstream), (ii) if the sign is hidden, derive it from each respective chunk, (iii) arrange the chunk of coefficients into a two-dimensional block in accordance with a predetermined ordering.

In another example, the processing circuitry of the sign encoding apparatus is further configured to: (i) determine a first non-zero coefficient in a chunk, (ii) determine whether or not the sign of said first non-zero coefficient is to be encoded in a result of the first function of transform coefficients in the chunk by evaluating the second function of the transform coefficient values in the chunk and a number of non-zero transform coefficients in the chunk, and (iii) embed the sign of the first non-zero coefficient according to the result of the determination. The processing circuitry of the sign decoding apparatus is correspondingly configured to: (i) determine a first non-zero coefficient in a chunk, (ii) determine whether or not the sign of said first non-zero coefficient is to be derived from a result of the first function of transform coefficients in the chunk by evaluating the second function of the transform coefficient values in the chunk and a number of non-zero transform coefficients in the chunk, and (iii) derive the sign of the first non-zero coefficient according to the result of the determination.

Various splitting approaches mentioned above provide an efficient subdivision of the coefficients into units to which the hiding may be applied.

In an embodiment, combinable with any of the previous embodiments or examples, the processing circuitry (of the sign encoding apparatus) is further configured to: when, according to the determination results, the sign of the current transform coefficient for none of the plurality of sets of transform coefficient values is to be embedded in a result of the first function of the respective transform coefficients, perform possibly the determination and the embedding for the transform unit. The processing circuitry of the sign decoding apparatus is correspondingly configured to: when, according to the determination results, the sign of the current transform coefficient for none of the plurality of sets of transform coefficient values is to be derived from a result of the first function of the respective transform coefficients, perform possibly the determination, and the derivation for the transform unit.

This approach may be applied irrespectively of how the evaluation of the second function is performed. Other than the second function may be used. It enables to apply the hiding at least in a larger scale if a smaller scale is not applicable as it could decrease the quality of the reconstructed signal.

In one particular example, the processing circuitry is further configured: to embed a first sign value with a first parity value and a second sign value with a second parity value, wherein the encoding is performed by: (i) determining whether the first function of the transform coefficients has a parity corresponding to the sign of the current coefficient; and (ii) if the first function does not have the parity corresponding to the sign of the current coefficient, modifying a value of one of said transform coefficients so that the first function of the transform coefficients has the parity corresponding to the sign of the current coefficient.

The processing circuitry of the sign decoding apparatus is correspondingly configured to: (i) determine the parity of the first function of the transform coefficients, (ii) if the parity has a first value (odd or even), derive that the sign of the current coefficient has a first value (positive or negative) and otherwise that the sign has a second value (negative or positive respectively) other than the first value.

Parity, which may be simply calculated as modulo operation, is a low-complexity function which delivers a Boolean result suitable for embedding of a binary value.

For example, the processing circuitry at the sign embedding apparatus is further configured not to permit modification of the value of a transform coefficient in case the modified value would lead to a judgment result different from the judgment result for unmodified value. This ensures that encoder and decoder operate compliantly and consistently in any case.

In an exemplary implementation, the first function and/or the second function is a sum of absolute transform coefficient values, and/or the transform coefficients are quantized and the coefficient value threshold is zero. This provides a low-complexity solution suitable for real-time processing.

Further still a video encoder is provided for encoding a video picture into a bitstream, including: a processing circuitry configured to transform prediction error of video picture samples into a set of transform coefficients; the apparatus for embedding a sign of a current transform coefficient among the set of the transform coefficients according as described above in any of its examples and embodiments; wherein the processing circuitry is further configured to generate a bitstream of the encoded video picture based on the set of the transform coefficients with the embedded sign.

Moreover, a video decoder for decoding a video picture from a bitstream is provided, comprising: a processing circuitry configured to parse from the bitstream the set of the transform coefficients with an embedded sign; the apparatus for deriving the sign of a current transform coefficient among the set of the transform coefficients as described above; wherein the processing circuitry is further configured to inverse transform the set of transform coefficients into a prediction error of video picture samples.

As mentioned above, the processing circuitry may be any software or hardware or any combination thereof.

The present disclosure further provides a method for encoding a sign of a current transform coefficient of a signal according to claim 14, the method comprising: determining whether or not the sign of the current transform coefficient is to be embedded in result of a first function of transform coefficients in a set of transform coefficients by evaluating a second function of the transform coefficient values in the set of transform coefficients and a number of those transform coefficients in the set of transform coefficients which are larger than a coefficient value threshold; and embedding the sign of the current transform coefficient according to the result of the determination.

Correspondingly, a method is provided for decoding a sign of a current transform coefficient of a signal according to claim 15, the method comprising: determining whether or not the sign of the current transform coefficient is to be derived from a value of a first function of transform coefficients in a set of transform coefficients by evaluating a second function of the transform coefficient values in the set of transform coefficients and a number of those transform coefficients in the set of transform coefficients which are larger than a coefficient value threshold; and deriving the sign of the current transform coefficient according to the result of the determination.

It is noted that the above methods may perform any additional steps of any embodiments, examples and implementations described above with reference to the processing circuitries of the sign embedding (encoding) apparatus and sign deriving (decoding) apparatus.

Details of one or more embodiments are set forth in the accompanying drawings and the description below.

**BRIEF** DESCRIPTION OF DRAWINGS

In the following embodiments of the invention are described in more detail with reference to the attached figures and drawings, in which:

Fig. 1    is a block diagram showing an example of a video encoder configured to implement embodiments of the invention;

Fig. 2    is a block diagram showing an example structure of a video decoder configured to implement embodiments of the invention;

Fig. 3    is a block diagram showing an example of a video coding system configured to implement embodiments of the invention;

Fig. 4    is a schematic drawing illustrating multiple sign bit hiding in coefficient groups adopted by JCT-VC to the HEVC/H.265 standard;

Fig. 5    is a schematic drawing illustrating multiple sign bit hiding in coefficient chunks;

Fig. 6    is a schematic drawing illustrating combined quad tree and binary tree splitting of a coding or transform unit;

Fig. 7    is a schematic drawing illustrating conditions for application of the sign bit hiding;

Fig. 8    is a flow diagram illustrating exemplary conditions for sigh bit hiding on TU and CG/CC level; and

Fig. 9    is a flow diagram illustrating another example of sign bit hiding.

## DETAILED DESCRIPTION

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Video coding typically refers to the processing of a sequence of pictures, which form the video or video sequence. Instead of the term picture the terms frame or image may be used as synonyms in the field of video coding. Video coding comprises two parts, video encoding and video decoding. Video encoding is performed at the source side, typically comprising processing (e.g. by compression) the original video pictures to reduce the amount of data required for representing the video pictures (for more efficient storage and/or transmission). Video decoding is performed at the destination side and typically comprises the inverse processing compared to the encoder to reconstruct the video pictures. Embodiments referring to "coding" of video pictures (or pictures in general, as will be explained later) shall be understood to relate to both, "encoding" and "decoding" of video pictures. The combination of the encoding part and the decoding part is also referred to as CODEC (COding and DECoding).

In case of lossless video coding, the original video pictures can be reconstructed, i.e. the reconstructed video pictures have the same quality as the original video pictures (assuming no transmission loss or other data loss during storage or transmission). In case of lossy video coding, further compression, e.g. by quantization, is performed, to reduce the amount of data representing the video pictures, which cannot be completely reconstructed at the decoder, i.e. the quality of the reconstructed video pictures is lower or worse compared to the quality of the original video pictures.

Several video coding standards since H.261 belong to the group of "lossy hybrid video codecs" (i.e. combine spatial and temporal prediction in the sample domain and 2D transform coding for applying quantization in the transform domain). Each picture of a video sequence is typically partitioned into a set of non-overlapping blocks and the coding is typically performed on a block level. In other words, at the encoder the video is typically processed, i.e. encoded, on a block (video block) level, e.g. by using spatial (intra picture) prediction and temporal (inter picture) prediction to generate a prediction block, subtracting the prediction block from the current block (block currently processed/to be processed) to obtain a residual block, transforming the residual block and quantizing the residual block in the transform domain to reduce the amount of data to be transmitted (compression), whereas at the decoder the inverse processing compared to the encoder is applied to the encoded or compressed block to reconstruct the current block for representation. Furthermore, the encoder duplicates the decoder processing loop such that both will generate identical predictions (e.g. intra- and inter-predictions) and/or re-constructions for processing, i.e. coding, the subsequent blocks.

As video picture processing (also referred to as moving picture processing) and still picture processing (the term processing comprising coding), share many concepts and technologies or tools, in the following the term "picture" is used to refer to a video picture (image) of a video sequence (as explained above) and/or to a still picture to avoid unnecessary repetitions and distinctions between video pictures and still pictures, where not necessary. In case the description refers to still pictures (or still images) only, the term "still picture" shall be used.

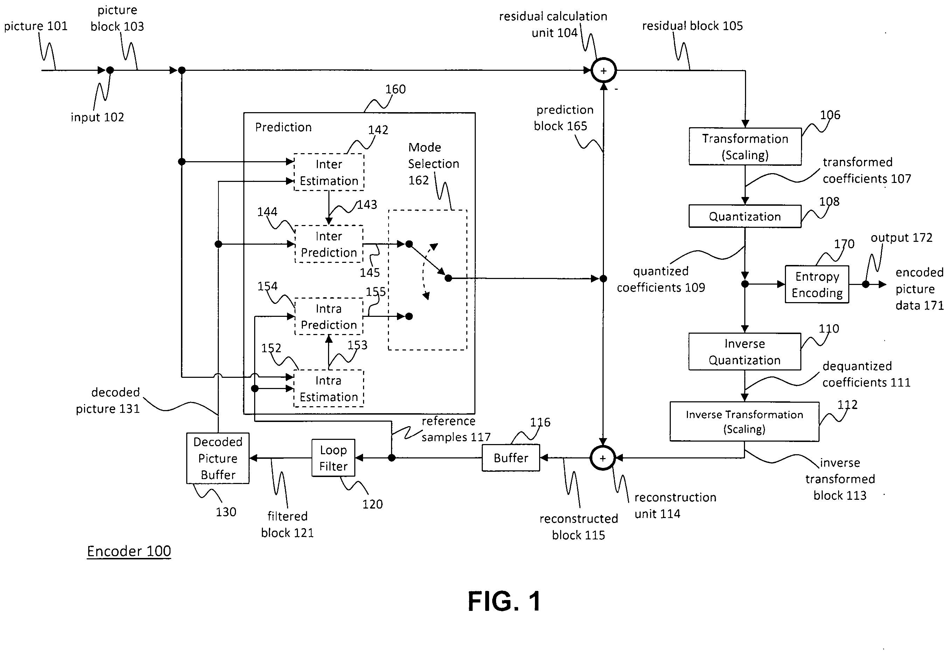

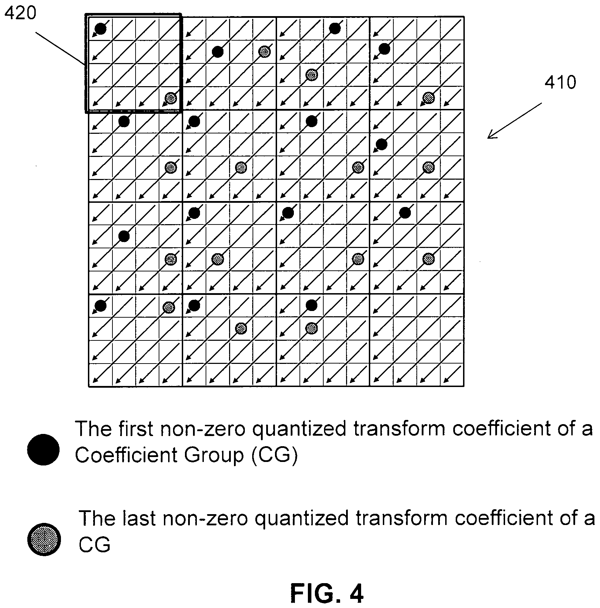

In the following embodiments of an encoder 100, a decoder 200 and a coding system 300 are described based on Figs. 1 to 3 before describing embodiments of the invention in more detail based on Figs. 4 to 9.

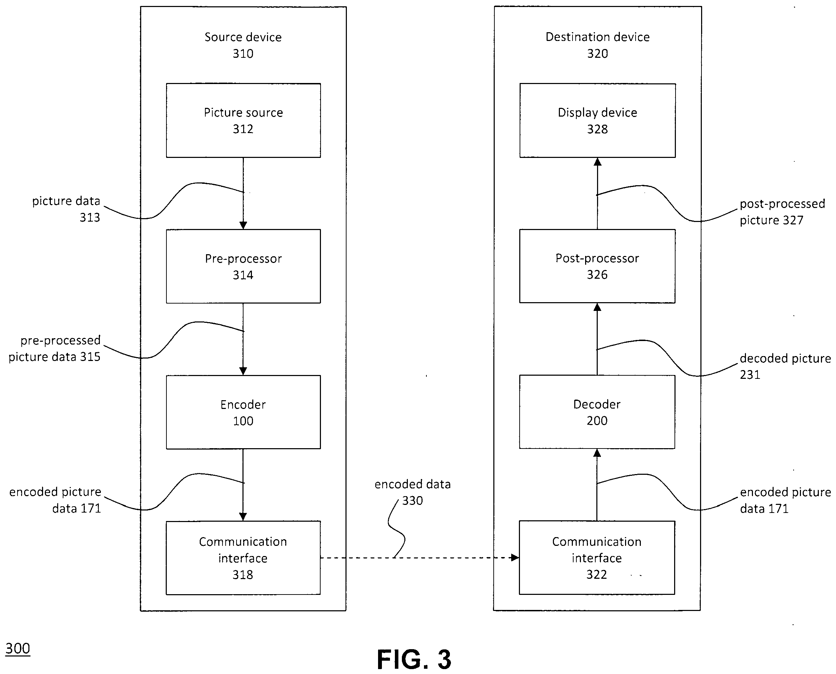

Fig. 3 is a conceptual or schematic block diagram illustrating an embodiment of a coding system 300, e.g. a picture coding system 300, wherein the coding system 300 comprises a source device 310 configured to provide encoded data 330, e.g. an encoded picture 330, e.g. to a destination device 320 for decoding the encoded data 330.

The source device 310 comprises an encoder 100 or encoding unit 100, and may additionally, i.e. optionally, comprise a picture source 312, a pre-processing unit 314, e.g. a picture pre-processing unit 314, and a communication interface or communication unit 318.

The picture source 312 may comprise or be any kind of picture capturing device, for example for capturing a real-world picture, and/or any kind of a picture generating device, for example a computer-graphics processor for generating a computer animated picture, or any kind of device for obtaining and/or providing a real-world picture, a computer animated picture (e.g. a screen content, a virtual reality (VR) picture) and/or any combination thereof (e.g. an augmented reality (AR) picture). In the following, all these kinds of pictures and any other kind of picture will be referred to as "picture" or "image", unless specifically described otherwise, while the previous explanations with regard to the term "picture" covering "video pictures" and "still pictures" still hold true, unless explicitly specified differently.

A (digital) picture is or can be regarded as a two-dimensional array or matrix of samples with intensity values. A sample in the array may also be referred to as pixel (short form of picture element) or a pel. The number of samples in horizontal and vertical direction (or axis) of the array or picture define the size and/or resolution of the picture. For representation of color, typically three color components are employed, i.e. the picture may be represented or include three sample arrays. In RBG format or color space a picture comprises a corresponding red, green and blue sample array. However, in video coding each pixel is typically represented in a luminance/chrominance format or color space, e.g. YCbCr, which comprises a luminance component indicated by Y (sometimes also L is used instead) and two chrominance components indicated by Cb and Cr. The luminance (or short luma) component Y represents the brightness or grey level intensity (e.g. like in a grey-scale picture), while the two chrominance (or short chroma) components Cb and Cr represent the chromaticity or color information components. Accordingly, a picture in YCbCr format comprises a luminance sample array of luminance sample values (Y), and two chrominance sample arrays of chrominance values (Cb and Cr). Pictures in RGB format may be converted or transformed into YCbCr format and vice versa, the process is also known as color transformation or conversion. If a picture is monochrome, the picture may comprise only a luminance sample array.

The picture source 312 may be, for example a camera for capturing a picture, a memory, e.g. a picture memory, comprising or storing a previously captured or generated picture, and/or any kind of interface (internal or external) to obtain or receive a picture. The camera may be, for example, a local or integrated camera integrated in the source device, the memory may be a local or integrated memory, e.g. integrated in the source device. The interface may be, for example, an external interface to receive a picture from an external video source, for example an external picture capturing device like a camera, an external memory, or an external picture generating device, for example an external computer-graphics processor, computer or server. The interface can be any kind of interface, e.g. a wired or wireless interface, an optical interface, according to any proprietary or standardized interface protocol. The interface for obtaining the picture data 312 may be the same interface as or a part of the communication interface 318. The communication interfaces may be any interfaces such as Ethernet, WLAN, Bluetooth, LTE, or any wired or unwired interface such as satellite or optical interfaces. The transmission may be peer-to-peer or broadcast or multicast.

In distinction to the pre-processing unit 314 and the processing performed by the pre-processing unit 314, the picture or picture data 313 may also be referred to as raw picture or raw picture data 313.

Pre-processing unit 314 is configured to receive the (raw) picture data 313 and to perform pre-processing on the picture data 313 to obtain a pre-processed picture 315 or pre-processed picture data 315. Pre-processing performed by the pre-processing unit 314 may, e.g., comprise trimming, color format conversion (e.g. from RGB to YCbCr), color correction, or de-noising.

The encoder 100 is configured to receive the pre-processed picture data 315 and provide encoded picture data 171 (further details will be described, e.g., based on Fig. 1).

Communication interface 318 of the source device 310 may be configured to receive the encoded picture data 171 and to directly transmit it to another device, e.g. the destination device 320 or any other device, for storage or direct reconstruction, or to process the encoded picture data 171 for respectively before storing the encoded data 330 and/or transmitting the encoded data 330 to another device, e.g. the destination device 320 or any other device for decoding or storing.

The destination device 320 comprises a decoder 200 or decoding unit 200, and may additionally, i.e. optionally, comprise a communication interface or communication unit 322, a post-processing unit 326 and a display device 328.

The communication interface 322 of the destination device 320 is configured receive the encoded picture data 171 or the encoded data 330, e.g. directly from the source device 310 or from any other source, e.g. a memory, e.g. an encoded picture data memory.

The communication interface 318 and the communication interface 322 may be configured to transmit respectively receive the encoded picture data 171 or encoded data 330 via a direct communication link between the source device 310 and the destination device 320, e.g. a direct wired or wireless connection, or via any kind of network, e.g. a wired (such as optical, power-line, copper, coaxial, or based on any other media) or wireless network or any combination thereof, or any kind of private and public network, or any kind of combination thereof.

The communication interface 318 may be, e.g., configured to package the encoded picture data 171 into an appropriate format, e.g. packets, for transmission over a communication link or communication network, and may further comprise data loss protection and data loss recovery.

The communication interface 322, forming the counterpart of the communication interface 318, may be, e.g., configured to de-package the encoded data 330 to obtain the encoded picture data 171 and may further be configured to perform data loss protection and data loss recovery, e.g. comprising error concealment.

Both, communication interface 318 and communication interface 322 may be configured as unidirectional communication interfaces as indicated by the arrow for the encoded picture data 330 in Fig. 3 pointing from the source device 310 to the destination device 320, or bi-directional communication interfaces, and may be configured, e.g. to send and receive messages, e.g. to set up a connection, to acknowledge and/or re-send lost or delayed data including picture data, and exchange any other information related to the communication link and/or data transmission, e.g. encoded picture data transmission.

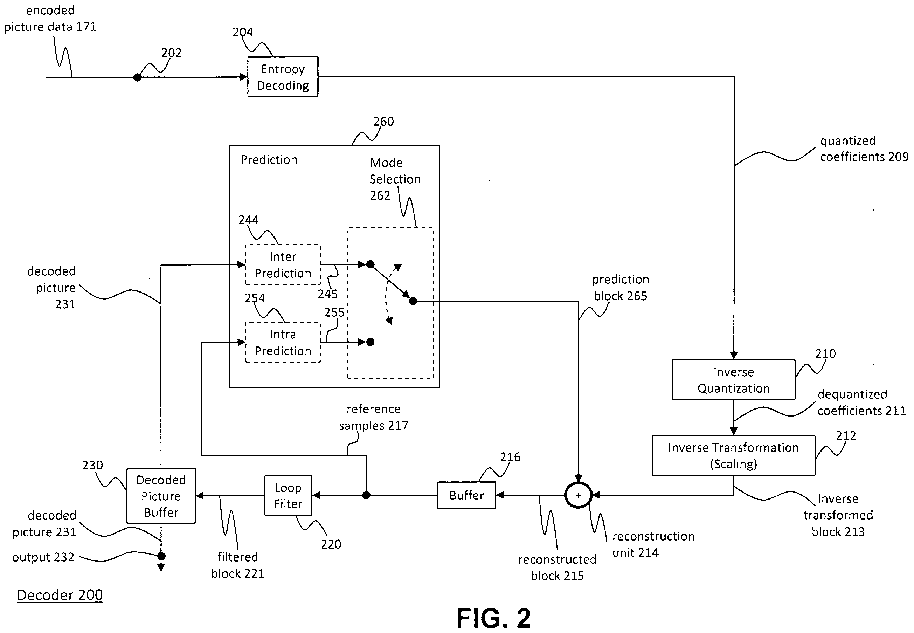

The decoder 200 is configured to receive the encoded picture data 171 and provide decoded picture data 231 or a decoded picture 231 (further details will be described, e.g., based on Fig. 2).

The post-processor 326 of destination device 320 is configured to post-process the decoded picture data 231, e.g. the decoded picture 231, to obtain post-processed picture data 327, e.g. a post-processed picture 327. The post-processing performed by the post-processing unit 326 may comprise, e.g. color format conversion (e.g. from YCbCr to RGB), color correction, trimming, or re-sampling, or any other processing, e.g. for preparing the decoded picture data 231 for display, e.g. by display device 328.

The display device 328 of the destination device 320 is configured to receive the post-processed picture data 327 for displaying the picture, e.g. to a user or viewer. The display device 328 may be or comprise any kind of display for representing the reconstructed picture, e.g. an integrated or external display or monitor. The displays may, e.g. comprise cathode ray tubes (CRT), liquid crystal displays (LCD), plasma displays, organic light emitting diodes (OLED) displays or any kind of other display including beamer, hologram, or 3D/VR glasses.

Although Fig. 3 depicts the source device 310 and the destination device 320 as separate devices, embodiments of devices may also comprise both or both functionalities, the source device 310 or corresponding functionality and the destination device 320 or corresponding functionality. In such embodiments the source device 310 or corresponding functionality and the destination device 320 or corresponding functionality may be implemented using the same hardware and/or software or by separate hardware and/or software or any combination thereof.

As will be apparent for the skilled person based on the description, the existence and (exact) split of functionalities of the different units or functionalities within the source device 310 and/or destination device 320 as shown in Fig. 3 may vary depending on the actual device and application.

Therefore, the source device 310 and the destination device 320 as shown in Fig. 3 are just example embodiments of the invention and embodiments of the invention are not limited to those shown in Fig. 3.

Source device 310 and destination device 320 may comprise any of a wide range of devices, including any kind of handheld or stationary devices, e.g. notebook or laptop computers, mobile phones, smart phones, tablets or tablet computers, cameras, desktop computers, set-top boxes, televisions, display devices, digital media players, video gaming consoles, video streaming devices, broadcast receiver device, or the like, and may use no or any kind of operating system.

*Encoder and encoding method*

Fig. 1 shows a schematic/conceptual block diagram of an embodiment of an encoder 100, e.g. a picture encoder 100, which comprises an input 102, a residual calculation unit 104, a transformation unit 106, a quantization unit 108, an inverse quantization unit 110, an inverse transformation unit 112, a reconstruction unit 114, a buffer 118, a loop filter 120, a decoded picture buffer (DPB) 130, a prediction unit 160 including an inter estimation unit 142, an inter prediction unit 144, an intra-estimation unit 152, an intra-prediction unit 154, a mode selection unit 162, an entropy encoding unit 170, and an output 172. A video encoder 100 as shown in Fig. 1 may also be referred to as hybrid video encoder or a video encoder according to a hybrid video codec.

For example, the residual calculation unit 104, the transformation unit 106, the quantization unit 108, and the entropy encoding unit 170 form a forward signal path of the encoder 100, whereas, for example, the inverse quantization unit 110, the inverse transformation unit 112, the reconstruction unit 114, the buffer 118, the loop filter 120, the decoded picture buffer (DPB) 130, the inter prediction unit 144, and the intra-prediction unit 154 form a backward signal path of the encoder, wherein the backward signal path of the encoder corresponds to the signal path of the decoder (see decoder 200 in Fig. 2).

The encoder is configured to receive, e.g. by input 102, a picture 101 or a picture block 103 of the picture 101, e.g. picture of a sequence of pictures forming a video or video sequence. The picture block 103 may also be referred to as current picture block or picture block to be coded, and the picture 101 as current picture or picture to be coded (in particular in video coding to distinguish the current picture from other pictures, e.g. previously encoded and/or decoded pictures of the same video sequence, i.e. the video sequence which also comprises the current picture).

Embodiments of the encoder 100 may comprise a partitioning unit (not depicted in Fig. 1), e.g. which may also be referred to as picture partitioning unit, configured to partition the picture 103 into a plurality of blocks, e.g. blocks like block 103, typically into a plurality of non-overlapping blocks. The partitioning unit may be configured to use the same block size for all pictures of a video sequence and the corresponding grid defining the block size, or to change the block size between pictures or subsets or groups of pictures, and partition each picture into the corresponding blocks hierarchically. The term block refers to a rectangular (not necessarily but possibly square) portion of image.

Like the picture 101, the block 103 again is or can be regarded as a two-dimensional array or matrix of samples with intensity values (sample values), although of smaller dimension than the picture 101. In other words, the block 103 may comprise, e.g., one sample array (e.g. a luma array in case of a monochrome picture 101) or three sample arrays (e.g. a luma and two chroma arrays in case of a color picture 101) or any other number and/or kind of arrays depending on the color format applied. The number of samples in horizontal and vertical direction (or axis) of the block 103 define the size of block 103.

Encoder 100 as shown in Fig. 1 is configured encode the picture 101 block by block, e.g. the encoding and prediction is performed per block 103.

The residual calculation unit 104 is configured to calculate a residual block 105 based on the picture block 103 and a prediction block 165 (further details about the prediction block 165 are provided later), e.g. by subtracting sample values of the prediction block 165 from sample values of the picture block 103, sample by sample (pixel by pixel) to obtain the residual block 105 in the sample domain.

The transformation unit 106 is configured to apply a transformation, e.g. a spatial frequency transform or a linear spatial (frequency) transform, e.g. a discrete cosine transform (DCT) or discrete sine transform (DST), on the sample values of the residual block 105 to obtain transformed coefficients 107 in a transform domain. The transformed coefficients 107 may also be referred to as transformed residual coefficients and represent the residual block 105 in the transform domain.

The transformation unit 106 may be configured to apply integer approximations of DCT/DST, such as the core transforms specified for HEVC/H.265. Compared to an orthonormal DCT transform, such integer approximations are typically scaled by a certain factor. In order to preserve the norm of the residual block which is processed by forward and inverse transforms, additional scaling factors are applied as part of the transform process. The scaling factors are typically chosen based on certain constraints like scaling factors being a power of two for shift operation, bit depth of the transformed coefficients, tradeoff between accuracy and implementation costs, etc. Specific scaling factors are, for example, specified for the inverse transform, e.g. by inverse transformation unit 212, at a decoder 200 (and the corresponding inverse transform, e.g. by inverse transformation unit 112 at an encoder 100) and corresponding scaling factors for the forward transform, e.g. by transformation unit 106, at an encoder 100 may be specified accordingly.

The quantization unit 108 is configured to quantize the transformed coefficients 107 to obtain quantized coefficients 109, e.g. by applying scalar quantization or vector quantization. The quantized coefficients 109 may also be referred to as quantized residual coefficients 109. For example for scalar quantization, different scaling may be applied to achieve finer or coarser quantization. Smaller quantization step sizes correspond to finer quantization, whereas larger quantization step sizes correspond to coarser quantization. The applicable quantization step size may be indicated by a quantization parameter (QP). The quantization parameter may for example be an index to a predefined set of applicable quantization step sizes. For example, small quantization parameters may correspond to fine quantization (small quantization step sizes) and large quantization parameters may correspond to coarse quantization (large quantization step sizes) or vice versa. The quantization may include division by a quantization step size and corresponding or inverse dequantization, e.g. by inverse quantization 110, may include multiplication by the quantization step size. Embodiments according to HEVC, may be configured to use a quantization parameter to determine the quantization step size. Generally, the quantization step size may be calculated based on a quantization parameter using a fixed point approximation of an equation including division. Additional scaling factors may be introduced for quantization and dequantization to restore the norm of the residual block, which might get modified because of the scaling used in the fixed point approximation of the equation for quantization step size and quantization parameter. In one example implementation, the scaling of the inverse transform and dequantization might be combined. Alternatively, customized quantization tables may be used and signaled from an encoder to a decoder, e.g. in a bitstream. The quantization is a lossy operation, wherein the loss increases with increasing quantization step sizes.

Embodiments of the encoder 100 (or respectively of the quantization unit 108) may be configured to output the quantization scheme and quantization step size, e.g. by means of the corresponding quantization parameter, so that a decoder 200 may receive and apply the corresponding inverse quantization. Embodiments of the encoder 100 (or quantization unit 108) may be configured to output the quantization scheme and quantization step size, e.g. directly or entropy encoded via the entropy encoding unit 170 or any other entropy coding unit.

The inverse quantization unit 110 is configured to apply the inverse quantization of the quantization unit 108 on the quantized coefficients to obtain dequantized coefficients 111, e.g. by applying the inverse of the quantization scheme applied by the quantization unit 108 based on or using the same quantization step size as the quantization unit 108. The dequantized coefficients 111 may also be referred to as dequantized residual coefficients 111 and correspond - although typically not identical to the transformed coefficients due to the loss by quantization - to the transformed coefficients 108.

The inverse transformation unit 112 is configured to apply the inverse transformation of the transformation applied by the transformation unit 106, e.g. an inverse discrete cosine transform (DCT) or inverse discrete sine transform (DST), to obtain an inverse transformed block 113 in the sample domain. The inverse transformed block 113 may also be referred to as inverse transformed dequantized block 113 or inverse transformed residual block 113.

The reconstruction unit 114 is configured to combine (e.g. add) the inverse transformed block 113 and the prediction block 165 to obtain a reconstructed block 115 in the sample domain, e.g. by sample wise adding the sample values of the decoded residual block 113 and the sample values of the prediction block 165.

The buffer unit 116 (or short "buffer" 116), e.g. a line buffer 116, is configured to buffer or store the reconstructed block and the respective sample values, for example for intra estimation and/or intra prediction. In further embodiments, the encoder may be configured to use unfiltered reconstructed blocks and/or the respective sample values stored in buffer unit 116 for any kind of estimation and/or prediction.

The loop filter unit 120 (or short "loop filter" 120), is configured to filter the reconstructed block 115 to obtain a filtered block 121, e.g. by applying a de-blocking sample-adaptive offset (SAO) filter or other filters, e.g. sharpening or smoothing filters or collaborative filters. The filtered block 121 may also be referred to as filtered reconstructed block 121. Other or futher filet may be applied in the loop.

Embodiments of the loop filter unit 120 may comprise (not shown in Fig. 1) a filter analysis unit and the actual filter unit, wherein the filter analysis unit is configured to determine loop filter parameters for the actual filter. The filter analysis unit may be configured to apply fixed pre-determined filter parameters to the actual loop filter, adaptively select filter parameters from a set of predetermined filter parameters or adaptively calculate filter parameters for the actual loop filter.

Embodiments of the loop filter unit 120 may comprise (not shown in Fig. 1) one or a plurality of filters (loop filter components/subfilters), e.g. one or more of different kinds or types of filters, e.g. connected in series or in parallel or in any combination thereof, wherein each of the filters may comprise individually or jointly with other filters of the plurality of filters a filter analysis unit to determine the respective loop filter parameters, e.g. as described in the previous paragraph. Embodiments of the encoder 100 (respectively loop filter unit 120) may be configured to output the loop filter parameters, e.g. directly or entropy encoded via the entropy encoding unit 170 or any other entropy coding unit, so that, e.g., a decoder 200 may receive and apply the same loop filter parameters for decoding.

The decoded picture buffer (DPB) 130 is configured to receive and store the filtered block 121. The decoded picture buffer 130 may be further configured to store other previously filtered blocks, e.g. previously reconstructed and filtered blocks 121, of the same current picture or of different pictures, e.g. previously reconstructed pictures, and may provide complete previously reconstructed, i.e. decoded, pictures (and corresponding reference blocks and samples) and/or a partially reconstructed current picture (and corresponding reference blocks and samples), for example for inter estimation and/or inter prediction.

Further embodiments of the invention may also be configured to use the previously filtered blocks and corresponding filtered sample values of the decoded picture buffer 130 for any kind of estimation or prediction, e.g. intra and inter estimation and prediction.

The prediction unit 160, also referred to as block prediction unit 160, is configured to receive or obtain the picture block 103 (current picture block 103 of the current picture 101) and decoded or at least reconstructed picture data, e.g. reference samples of the same (current) picture from buffer 116 and/or decoded picture data 231 from one or a plurality of previously decoded pictures from decoded picture buffer 130, and to process such data for prediction, i.e. to provide a prediction block 165, which may be an inter-predicted block 145 or an intra-predicted block 155.

Mode selection unit 162 may be configured to select a prediction mode (e.g. an intra or inter prediction mode) and/or a corresponding prediction block 145 or 155 to be used as prediction block 165 for the calculation of the residual block 105 and for the reconstruction of the reconstructed block 115.

Embodiments of the mode selection unit 162 may be configured to select the prediction mode (e.g. from those supported by prediction unit 160), which provides the best match or in other words the minimum residual (minimum residual means better compression for transmission or storage), or a minimum signaling overhead (minimum signaling overhead means better compression for transmission or storage), or which considers or balances both. The mode selection unit 162 may be configured to determine the prediction mode based on rate distortion optimization (RDO), i.e. select the prediction mode which provides a minimum rate distortion optimization or which associated rate distortion at least a fulfills a prediction mode selection criterion.

In the following the prediction processing (e.g. prediction unit 160 and mode selection (e.g. by mode selection unit 162) performed by an example encoder 100 will be explained in more detail.

As described above, encoder 100 is configured to determine or select the best or an optimum prediction mode from a set of (pre-determined) prediction modes. The set of prediction modes may comprise, e.g., intra-prediction modes and/or inter-prediction modes.

The set of intra-prediction modes may comprise 32 different intra-prediction modes, e.g. non-directional modes like DC (or mean) mode and planar mode, or directional modes, e.g. as defined in H.264, or may comprise 65 different intra-prediction modes, e.g. non-directional modes like DC (or mean) mode and planar mode, or directional modes, e.g. as defined in H.265.

The set of (or possible) inter-prediction modes depend on the available reference pictures (i.e. previous at least partially decoded pictures, e.g. stored in DBP 230) and other inter-prediction parameters, e.g. whether the whole reference picture or only a part, e.g. a search window area around the area of the current block, of the reference picture is used for searching for a best matching reference block, and/or e.g. whether pixel interpolation is applied, e.g. half/semi-pel and/or quarter-pel interpolation, or not.

Additional to the above prediction modes, skip mode and/or direct mode may be applied.

The prediction unit 160 may be further configured to partition the block 103 into smaller block partitions or sub-blocks, e.g. iteratively using quad-tree-partitioning (QT), binary partitioning (BT) or triple-tree-partitioning (TT) or any combination thereof, and to perform, e.g. the prediction for each of the block partitions or sub-blocks, wherein the mode selection comprises the selection of the tree-structure of the partitioned block 103 and the prediction modes applied to each of the block partitions or sub-blocks.

The inter estimation unit 142, also referred to as inter picture estimation unit 142, is configured to receive or obtain the picture block 103 (current picture block 103 of the current picture 101) and a decoded picture 131, or at least one or a plurality of previously reconstructed blocks, e.g. reconstructed blocks of one or a plurality of other/different previously decoded pictures 131, for inter estimation (or "inter picture estimation"). E.g. a video sequence may comprise the current picture and the previously decoded pictures 131, or in other words, the current picture and the previously decoded pictures 131 may be part of or form a sequence of pictures forming a video sequence.

The encoder 100 may, e.g., be configured to select a reference block from a plurality of reference blocks of the same or different pictures of the plurality of other pictures and provide a reference picture (or reference picture index) and/or an offset (spatial offset) between the position (x, y coordinates) of the reference block and the position of the current block as inter estimation parameters 143 to the inter prediction unit 144. This offset is also called motion vector (MV). The inter estimation is also referred to as motion estimation (ME) and the inter prediction also motion prediction (MP).

The inter prediction unit 144 is configured to obtain, e.g. receive, an inter prediction parameter 143 and to perform inter prediction based on or using the inter prediction parameter 143 to obtain an inter prediction block 145.

Although Fig. 1 shows two distinct units (or steps) for the inter-coding, namely inter estimation 142 and inter prediction 152, both functionalities may be performed as one (inter estimation requires/comprises calculating an/the inter prediction block, i.e. the or a "kind of" inter prediction 154), e.g. by testing all possible or a predetermined subset of possible inter-prediction modes iteratively while storing the currently best inter prediction mode and respective inter prediction block, and using the currently best inter prediction mode and respective inter prediction block as the (final) inter prediction parameter 143 and inter prediction block 145 without performing another time the inter prediction 144.

The intra estimation unit 152 is configured to obtain, e.g. receive, the picture block 103 (current picture block) and one or a plurality of previously reconstructed blocks, e.g. reconstructed neighbor blocks, of the same picture for intra estimation. The encoder 100 may, e.g., be configured to select an intra prediction mode from a plurality of *(predetermined)* intra prediction modes and provide it as intra estimation parameter 153 to the intra prediction unit 154.

Embodiments of the encoder 100 may be configured to select the intra-prediction mode based on an optimization criterion, e.g. minimum residual (e.g. the intra-prediction mode providing the prediction block 155 most similar to the current picture block 103) or minimum rate distortion.

The intra prediction unit 154 is configured to determine based on the intra prediction parameter 153, e.g. the selected intra prediction mode 153, the intra prediction block 155.

Although Fig. 1 shows two distinct units (or steps) for the intra-coding, namely intra estimation 152 and intra prediction 154, both functionalities may be performed as one (intra estimation requires/comprises calculating the intra prediction block, i.e. the or a "kind of" intra prediction 154), e.g. by testing all possible or a predetermined subset of possible intra-prediction modes iteratively while storing the currently best intra prediction mode and respective intra prediction block, and using the currently best intra prediction mode and respective intra prediction block as the (final) intra prediction parameter 153 and intra prediction block 155 without performing another time the intra prediction 154.

The entropy encoding unit 170 is configured to apply an entropy encoding algorithm or scheme (e.g. a variable length coding (VLC) scheme, an context adaptive VLC scheme (CALVC), an arithmetic coding scheme, a context adaptive binary arithmetic coding (CABAC)) on the quantized residual coefficients 109, inter prediction parameters 143, intra prediction parameter 153, and/or loop filter parameters, individually or jointly (or not at all) to obtain encoded picture data 171 which can be output by the output 172, e.g. in the form of an encoded bitstream 171.

Figure 2 shows an exemplary video decoder 200 configured to receive encoded picture data (e.g. encoded bitstream) 171, e.g. encoded by encoder 100, to obtain a decoded picture 231.

The decoder 200 comprises an input 202, an entropy decoding unit 204, an inverse quantization unit 210, an inverse transformation unit 212, a reconstruction unit 214, a buffer 216, a loop filter 220, a decoded picture buffer 230, a prediction unit 260, an inter prediction unit 244, an intra prediction unit 254, a mode selection unit 260 and an output 232.

The entropy decoding unit 204 is configured to perform entropy decoding to the encoded picture data 171 to obtain, e.g., quantized coefficients 209 and/or decoded coding parameters (not shown in Fig. 2), e.g. (decoded) any or all of inter prediction parameters 143, intra prediction parameter 153, and/or loop filter parameters.

In embodiments of the decoder 200, the inverse quantization unit 210, the inverse transformation unit 212, the reconstruction unit 214, the buffer 216, the loop filter 220, the decoded picture buffer 230, the prediction unit 260 and the mode selection unit 260 are configured to perform the inverse processing of the encoder 100 (and the respective functional units) to decode the encoded picture data 171.

In particular, the inverse quantization unit 210 may be identical in function to the inverse quantization unit 110, the inverse transformation unit 212 may be identical in function to the inverse transformation unit 112, the reconstruction unit 214 may be identical in function reconstruction unit 114, the buffer 216 may be identical in function to the buffer 116, the loop filter 220 may be identical in function to the loop filter 220 (with regard to the actual loop filter as the loop filter 220 typically does not comprise a filter analysis unit to determine the filter parameters based on the original image 101 or block 103 but receives (explicitly or implicitly) or obtains the filter parameters used for encoding, e.g. from entropy decoding unit 204), and the decoded picture buffer 230 may be identical in function to the decoded picture buffer 130.

The prediction unit 260 may comprise an inter prediction unit 244 and an inter prediction unit 254, wherein the inter prediction unit 144 may be identical in function to the inter prediction unit 144, and the inter prediction unit 154 may be identical in function to the intra prediction unit 154. The prediction unit 260 and the mode selection unit 262 are typically configured to perform the block prediction and/or obtain the predicted block 265 from the encoded data 171 only (without any further information about the original image 101) and to receive or obtain (explicitly or implicitly) the prediction parameters 143 or 153 and/or the information about the selected prediction mode, e.g. from the entropy decoding unit 204.

The decoder 200 is configured to output the decoded picture 230, e.g. via output 232, for presentation or viewing to a user.

As described above, some image and video codecs code quantized transformation coefficients. Non-zero transformation coefficients are signed, i.e. consist of an absolute value and either a plus or minus sign. Coding of a sign for one coefficient requires one bit indicating either positive or negative sign. In other words, a sign bit value 0 may indicate a positive sign, while a sign bit value 1 may indicate a negative sign, or vice versa.

In order to efficiently convey the signs, a technique referred to as Sign Data Hiding (SDH) has been developed. In particular, SDH has been described in contribution *JCTVC-G0271G by* Clare, F. Henry, and J. Jung, titled "Sign Data Hiding," on the 7th JCT-VC meeting, Geneva, Switzerland, November 2011. The main idea of the contribution is as follows. For each Transformation Unit (TU) satisfying a condition that the number of coefficients between the position $P_{FSC}$ of the first and the position $P_{LSC}$ of the last nonzero coefficients is greater than a threshold $D_{thr}$:

$$P_{LSC} - P_{FSC} \geq D_{thr},$$

the sign bit for the first nonzero coefficient is embedded into the parity of the sum of absolute values of all nonzero coefficients. Four threshold values of the threshold $D_{thr}$ are signaled according to the respective four coefficient types, namely luminance coefficient, chrominance coefficient, coefficient of intra-prediction residual or coefficient of inter-prediction residual. Exemplary thresholds are listed in Table 1 below.

*Table 1: Thresholds are for four data types*

| CU type | Intra | Inter |
|---------|-------|-------|
| Luma    | 5     | 3     |
| Chroma  | 5     | 5     |

For all TUs with various sizes from 4 x 4 to 32 x 32, one single sign bit may be hidden for each TU according to contribution *JCTVC-H0481 by* X. Yu, J. Wang, D. He, G. Martin-Cocher, and S. Campbell, titled "Multiple Sign Bits Hiding," on the 8th JCT-VC meeting, San Jose, USA, February 2012. Finally, the modification of the SDH technique known as Multiple Sign Bits Hiding (Multiple SBH, MSBH) based on the contribution JCTVC-H0481 was adopted for the H.265/HEVC standard. In H.265/HEVC, the quantized transform coefficients are entropy-coded in groups of 16 coefficients (corresponding to 4 x 4 coefficients) for each transform unit. With multiple sign bits hiding, for each coefficient group (rather than for the entire transform unit) that satisfy certain conditions, the sign of the first non-zero coefficient along the scanning path is not explicitly transmitted in the bitstream but is rather derived from the parity of the sum of all absolute values of non-zero coefficients in that coefficient group at the decoder. To ensure the matching between the hidden sign and the parity of the sum, the parity is adjusted at the encoder based on rate-distortion optimization or distortion minimization.

Figure 4 shows a larger TU 410 with a size of 16 x 16 coefficients which is divided into 16 coefficient groups with the size 4x4, of which the first CG is denoted by reference numeral 420. Figure 4 further shows for each CG the first non-zero quantized transform coefficient and the last non-zero quantized transform coefficient in a predetermined scanning order. The diagonal arrows indicate the scanning order of the coefficients in Figure 4. In this example, the scanning order is diagonal from top to bottom. However, it is noted that sign bit hiding may also work with different scan orders. In such case, the position of the first and the last non-zero coefficients may change corresponding to the scan order. It is noted that the scanning order may be predetermined in various ways. For example, it may be predefined in a standard or configurable by signaling one of possible predefined scans specified in a standard within the bitstream or configurable by defining the scan within the bitstream.

In the following it is assumed that the sign of the first non-zero coefficient is embedded (coded) in the parity of the sum of all non-zero coefficients (unsigned). However, in general, a sign of another non-zero coefficient may be conveyed in this way. For a particular CG, if the sign of the first non-zero coefficient is positive, the parity of absolute values of quantized transform coefficients is to be even. Otherwise (if sign of the first non-zero coefficient is negative), the parity is to be odd. Accordingly, the sign bit data hiding at the encoder includes the following steps for one CG:

a) Check, whether conditions for applying sign bit hiding are fulfilled for the CG.
b) Determine the first non-zero coefficient in the CG and its sign.
c) Calculate parity of the sum of all absolute coefficient values in the CG.
d) Embed the determined sign: If the calculated parity corresponds to the determined sign, no modification of coefficient values is necessary. Otherwise, a value of one of the coefficient is the CG is modified by increasing or decreasing it by one, so that the parity corresponds to the determined sign.

The above steps are repeated for all CGs in the TU.

Correspondingly, at the decoder, the following steps are performed for one CG:

a) Parse from the bitstream unsigned coefficient values of the CG.
b) Determine whether or not sign data hiding was applied based on conditions and/or information extracted from a bitstream (such as a flag indicating whether or not SBH is allowed).
c) Determine the first non-zero coefficient in the CG.
d) Calculate parity of the sum of all absolute coefficient values in the CG.
e) If the parity has a first value (even or odd), set the sign of the first non-zero coefficient to the respective first polarity corresponding to the first value (positive or negative).

The above steps are only exemplary. Parity may be calculated as modulo 2 applied to the sum which corresponds to taking the least significant bit of the binary representation of the sum. It is noted that in general, a function different from parity of the sum of all coefficients may be applied to embed in its result one or more signs of the respective one or more coefficients in the CG. For instance, in order to hide 2 signs, a modulo 4 operation applied to the sum of absolute value of all coefficients may be applied. Each possible result of the modulo 4 operation (there are four possible results 0, 1, 2, 3) may be assigned to one combination of the first and second sign (e.g. ++, +-, -+, --).

Step d) of the encoder side mentioned above defines the embedding of the one or more signs into the function of coefficients of the CG. In general, if modification of a coefficient is necessary to match the parity to the sign to be embedded, the image signal reconstructed from such modified CG may experience some distortion. Accordingly, it is beneficial, if the coefficient to be modified in value is selected based on minimizing distortion or optimizing a rate-distortion function. The same applies if more than one signs are coded. In such a case, one or more coefficient values may be modified to embed the signs.

The present disclosure is applicable to multiple sign bit hiding based on the CGs, but may equally be applied to a TU directly without splitting the TU further into the CGs.

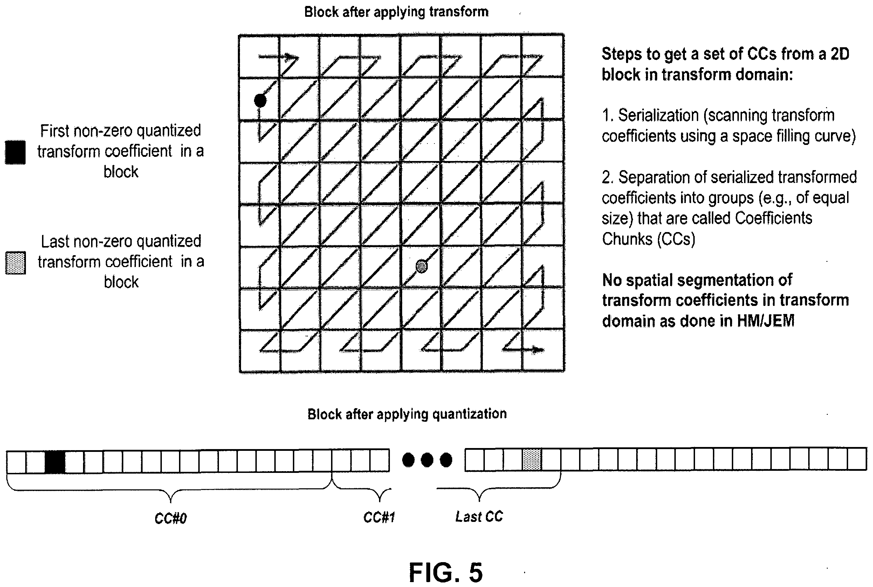

As described above, the CGs are obtained by spatially separating transform coefficients in transform domain into groups of the same size (e.g., 4x4 coefficients as shown in Fig. 4). In other words, the dividing of a TU into CGs precedes serializing the transform coefficients by scanning them using a space filling curve (predetermined scan order). An alternative way to separate a TU into groups of coefficients is to firstly scan the coefficients of the TU and to then divide the serialized (scanned) coefficients into groups which will be referred in the following as Coefficients Chunks (CCs). This separation mechanism is shown in Figure 5.

In particular, Figure 5 shows an 8x8 block (TU) of coefficients. They are serialized by scanning them in the predetermined order, e.g. such as in this case a zig-zag scanning order. After the scanning, the coefficients are provided in a sequence shown on the bottom of Figure 5. The sequence is then divided into chunks of coefficients CC#0, CC#1, ...., Last CC.

The chunks may be processed in a similar way as shown for the CGs above. For each chunk, one or more conditions are evaluated to determine whether or not SBH is to be applied for the CC. If SBH is to be applied, embedding the sign of the first non-zero coefficient into a function of a plurality or all coefficients in the CC.

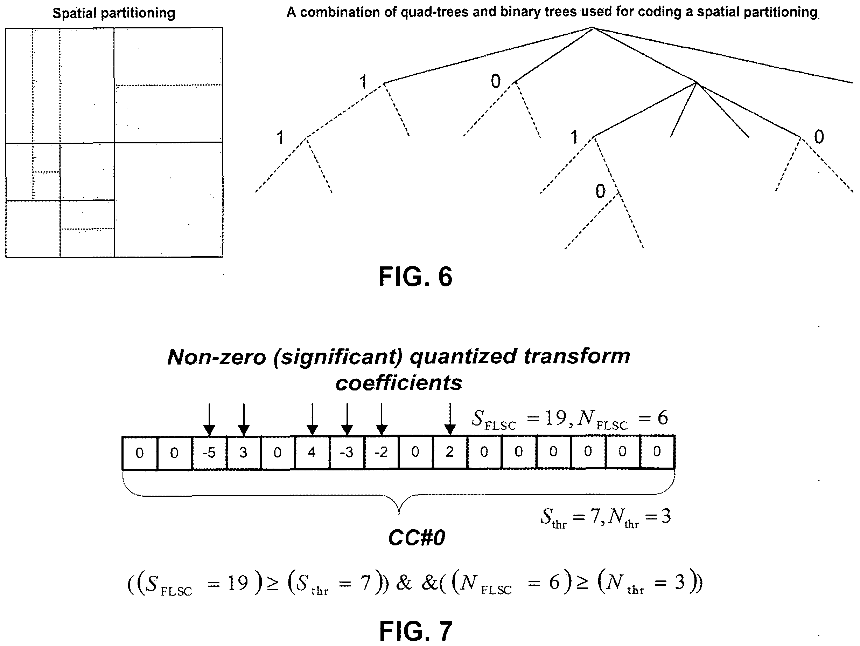

In contrast to the HM framework that is a reference implementation of the H.265/HEVC standard and where QT-based partitioning was used in a combination with asymmetric partitioning for inter-predicted blocks, a new partitioning mechanism based on both quad tree and binary tree and known as QTBT was proposed for the JEM-3.0 software, experimental software of the JCTVC. As depicted in Figure 6, QTBT partitioning can provide not only square but also rectangular blocks. Of course, some signaling overhead and increased computational complexity at the encoder side are the price of the QTBT partitioning as compared to conventional quad-tree based partitioning used in the HEVC/H.265 standard. Nevertheless, the QTBT-based partitioning is endowed with better segmentation properties and, hence, demonstrates significantly higher coding efficiency than the conventional quad-tree partitioning. Anyway, these changes of partitioning mechanisms can impact residual coding in general and/or SBH.

In particular, Figure 6 on the left hand side shows subdivision (splitting) of a coding unit (which may be also TU) into blocks of rectangular and/or square shape. This is achieved by splitting the TU hierarchically in both vertical and horizontal direction (corresponding to quad tree) or splitting the TU in one of the directions only (binary tree). On the right hand side, the splitting is represented by a quad/binary tree. The root corresponds to the TU. The TU is at first split into four square units. The square units except for the bottom right unit are further split. For example, the top left unit is further split to two rectangular vertical units, one of which is further split into two rectangular vertical units, corresponding to the left branches of the tree. It is noted that the above mentioned SBH may also be applied to the respective units after splitting. These units may have different sizes and shapes such as those shown in Figure 6. The SBH is applied to the units in the same way as for CGs.

Currently, as mentioned above, a single threshold for the distance between the first and the last non-zero coefficient is initially defined for each picture (its default value is $D_{thr} = 4$) to decide whether or not SBH is to be applied. In the H.265/HEVC standard, this threshold is fixed (unchangeable). The threshold on a distance between the first and the last non-zero coefficient may generally make sense. If the distance is too small, there will be statistically less coefficients the value of which may be modified. If there are not enough coefficients, there may be a lower probability to find coefficients to be modified while maintaining low distortion. However, this may not be true for some cases.

Accordingly, the current mechanisms of detecting blocks suitable for SBH (SBH or MSBH) can still either reject blocks where 1-bit hiding is profitable in the RD-sense or accept such blocks where this sign bit hiding procedure is not profitable. Both wrong decisions reduce the BD-rate gain caused by SBH techniques. In addition, introducing new partitioning, prediction, transform and residue coding techniques in the JEM and other state-of-the-art HEVC frameworks changed the statistics within TUs and CGs that can require the refinement of the sign hiding conditions.

One of the aims of some embodiments may be improving the compression performance of SBH techniques by enabling data hiding for such blocks where this procedure is efficient in the RD-sense and by disabling data hiding for such blocks where this procedure is inefficient in the RD-sense.

This may be achieved by not merely calculating the distance between the last and first non-zero quantized transform coefficients, but using a combination of the following criteria:

- the sum of magnitudes of quantized transform coefficients;

- the number of non-zero quantized transform coefficients.

In addition to the above criteria, the conventional criterion (the distance between the last and first non-zero quantized transform coefficients) may also be included into this combination.

It is noted that the present disclosure is applicable not only to SBH techniques but also to other hiding-based techniques (e.g., implicit mechanisms to signal, which transform is selected, by checking the parity of the sum of quantized transform coefficients magnitudes within a block to be transformed, or implicit signaling of any other parameter values or flags).

One of the effects of the embodiments may be allowing increasing the compression performance without increasing computational complexity at both encoder and decoder sides, since the criteria for application of SBH are calculated even in the conventional case (only several additional comparisons may be implemented per CG, CC or a block).

In particular, in some embodiments it is possible to increase the compression performance due to increasing the number of CGs, CCs, or blocks where SBH is profitable in RD-sense and due to reducing their number in the opposite case. Hardware and computational complexities are not increased at both encoder and decoder sides or increased only negligibly. The embodiments of the present invention can be used in many potential applications in hybrid video coding paradigms that are compatible with the HM software and the VPX video codec family as well as the JEM software and the VPX/AV1 video codec family that are a state-of-the-art and a next-generation video coding frameworks, respectively. Moreover the embodiments can be easily implemented in codecs that use conventional SBH mechanisms.

According to an embodiment, an apparatus is provided for encoding a sign of a current transform coefficient of a signal. The present disclosure provides some examples in which the signal is an image signal or motion picture (video) signal. However, the present disclosure is also applicable to other signals, since transformation-based coding may be efficiently applied for compression of other kinds of signals such as audio or speech. Moreover, the hiding conditions could be also applied directly for sample values without transformation, since the principle of hiding values of a parameter by modifying content to be encoded is similar as are the conditions in the image/video coding based on transformation coefficients.

In the embodiment described herein in detail, the transform coefficient is for instance a spectral coefficient, such as a coefficient resulting from a spectral transformation, for instance discrete Fourier transformation (DFT), fast Fourier transformation (FFT), discrete cosine or sine transformation (DCT, DST) or the like.

The apparatus for encoding a sign comprises a processing circuitry which is configured to determine whether or not the sign of the current transform coefficient is to be embedded in a result of a first function of transform coefficients in a set of transform coefficients by evaluating a second function of the transform coefficient values in the set of transform coefficients and a number of those transform coefficients in the set of transform coefficients which are larger than a coefficient value threshold, and configured to embed the sign of the current transform coefficient according to the result of the determination.

Embedding may be understood as an implicit encoding, i.e. encoding without adding a separate parameter by modifying a value of existing parameters in the bitstream.

The term "current coefficient" denotes any coefficient of which the sign is to be hidden. This may be the first non-zero coefficient. However, the present disclosure is not limited thereto and, in general, a sign of any coefficient may be encoded in this way, such as a sign of the largest coefficient or a sign of the second, third or any coefficient.

An example for the first function is a parity of a sum of absolute coefficient values, i.e. sum of unsigned coefficient values. Such first function is computationally simple. However, the present disclosure is not limited thereto and instead of the sum of absolute values, a sum of square values or other function may be used. In general, parity corresponds to modulo 2 operation. However, the present disclosure is not limited thereto. In general, more than one sign may be embedded for instance by applying modulo M operation, M being an integer larger than 2. Any other function which may take two values to distinguish between the positive and negative sign may in general be used.

The set of transform coefficients on which the function is calculated may be the entire TU, or a coefficient group (CG) or a coefficient chunk (CC) or a unit of any size to which a transformation unit may be subdivided or to which a plurality of TUs may be joined. The set of coefficients may include the current coefficient, too. However, embodiments in which the set of coefficients does not include the current coefficient are also possible. It may be beneficial if, in case the current coefficient belongs to the set of coefficients and its value may be modified, the modification does not change the sign of the current coefficient. In other words, in one exemplary embodiment, modification of the current coefficient is allowed but only as far as it does not change its sign.

The second function, $S_{FLSC}$, may be a sum of absolute values of the coefficients in the set. However, the second function is a sum of absolute values only of certain coefficients among the coefficients in the set, corresponding to weighted sum of the coefficients from the set with some weights equal to zero. The weights may also be set differently for different coefficients and may take values different from one or zero.

The coefficient value threshold may be for instance zero. However, zero is only an example and, in general, the threshold may be a number higher than zero. It may be advantageous to modify transformation coefficients after they were quantized (in case quantization is to be applied after transformation). This ensures that the quantization does not change the result of the first function so that the embedded sign is reliably conveyed in the bitstream to the decoder. In addition to the above described apparatus for encoding the sign, an embodiment also provides an apparatus for decoding a sign of a current transform coefficient of a signal. The apparatus for decoding the sign comprises a processing circuitry which is configured to: determine whether or not the sign of the current transform coefficient is to be decoded from parity of a first function of transform coefficients in a set of transform coefficients by evaluating a second function of the transform coefficient values in the set of transform coefficients and a number (amount) of those transform coefficients in the set of transform coefficients which are larger than a coefficient value threshold and configured to decode the sign of the current transform coefficient according to the result of the determination.

In the following, some exemplary details of the above embodiments are described. In particular, the known criteria that enable to identify CGs, CCs, or blocks suitable for SBH (or another hiding-related technique) are improved. For example, the new criterion can be formalized as follows:

$$(S_{\text{FLSC}} \geq S_{\text{thr}}) \&\& (N_{\text{FLSC}} \geq N_{\text{thr}}), \qquad \text{[Equation 1]}$$

where $S_{\text{FLSC}}$ is the sum of magnitudes (absolute values) of non-zero quantized transform coefficients in the evaluated set of coefficients (TU, SG, CC, block or any other) and $N_{\text{FLSC}}$ is the number of the non-zero quantized transform coefficients. Moreover, $S_{\text{thr}}$ and $N_{\text{thr}}$ are the threshold values for the sum of magnitudes and the number of non-zero quantized transform coefficients, respectively. The operator "&&" stands for logical (Boolean) AND. In other words, the SBH is applied for a set of coefficients if Equation 1 is true and not applied if Equation 1 is false.

However, the present disclosure is not limited to the above exemplary condition. Further conditions may be added. Another example of a condition is presented below:

$$\left(P_{\text{LSC}} - P_{\text{FSC}} \geq D_{\text{thr}}\right) \| ((S_{\text{FLSC}} \geq S_{\text{thr}}) \&\& (N_{\text{FLSC}} \geq N_{\text{thr}})), \qquad \text{[Equation 2]}$$

where $P_{\text{FSC}}$ and $P_{\text{LSC}}$ are the positions of the first non-zero coefficient and the last non-zero coefficient, respectively. $D_{\text{thr}}$ is the distance threshold, i.e. distance between the position of the first and the last non-zero coefficients. Logical (Boolean) operator "‖" stands for logical OR (non-exclusive). As can be seen, this additional condition corresponds to the condition currently applied by HEVC. The distance threshold $D_{\text{thr}}$ may also equal to 4 by default. However, according to the present disclosure, it may also take different value, especially for various different block / CG / CC sizes. As compared to Equation 1, the extended Equation 2 allows to add some new blocks / CGs / CCs among those in which SBH is applicable, without excluding any others. In other words, the SBH is applied if Equation 2 is true and not applied if Equation 2 is false.

Figure 7 illustrates application of Equation 1 to a chunk of transform coefficients. In particular, Figure 7 shows a chunk of 16 coefficients, out of which six have a value larger than zero. Let us set the thresholds to $S_{\text{thr}} = 7$ and $N_{\text{thr}} = 3$ in this example. Moreover, in Figure 7, $S_{\text{FLSC}}$ is the sum of magnitudes (absolute values) of non-zero quantized transform coefficients in the evaluated set of coefficients, i.e. in the chunk CC#0, which equals to 5+3+4+3+2+2=19. On the other hand, $N_{\text{FLSC}}$ is the number of the non-zero quantized transform coefficients which is equal to 6. Correspondingly, the condition given by Equation 1 is fulfilled, i.e. the result of Equation 1 is TRUE. Consequently, SBH is to be applied for the chunk CC#0.

In general, the evaluating of the second function of the transform coefficient values in the set of transform coefficients includes comparing the second function of said transform coefficient values with a second function threshold ($S_{\text{thr}}$). The evaluating of the number of those transform coefficients in the set of transform coefficients which are larger than the coefficient value threshold includes comparison of said number with a number threshold ($N_{\text{thr}}$). Such evaluation is simple and effective; it can take only two values which indicate whether or not the SBH is to be applied.

According to an exemplary embodiment, the evaluating is performed for a plurality of combinations of values of the second function threshold and the number threshold. In particular, the sign of the current transform coefficient is encoded (embedded) in a result of the first function of the transform coefficients if the evaluating is successful for at least one of the plurality of combinations and not encoded (embedded) in the result of said first function of the transform coefficients otherwise. Providing different threshold combinations brings more flexibility and includes more blocks / CCs / CGs among those for which SBH is applicable. The evaluation is "successful" if a condition on exceeding or not exceeding the threshold combination is fulfilled, i.e. the logical expression defining the condition is TRUE.

In one exemplary implementation, different combinations of threshold values of $S_{\text{thr}}$ and $N_{\text{thr}}$ are shown in Table 1 below. The first column of Table 2 includes values of the index $Idx_{LUT}$ which denote the respective threshold combinations corresponding to rows of the table.

*Table 1: An example of a look-up table to store threshold values of $N_{\text{thr}}$ and $S_{\text{thr}}$ for different indices $Idx_{LUT}$ (the number of records in this look-up table is $R_{LUT} = 4$).*

| Index in table (Idx_LUT) | Number of non-zero (significant) quantized transform coefficients $N_{\text{thr}}$ | Sum of quantized transform coefficient magnitudes $S_{\text{thr}}$ |
|---|---|---|
| 0 | 2 | 7 |
| 1 | 3 | 7 |
| 2 | 4 | 6 |

(continued)

| Index in table (Idx$_{LUT}$) | Number of non-zero (significant) quantized transform coefficients $N_{thr}$ | Sum of quantized transform coefficient magnitudes $S_{thr}$ |
|---|---|---|
| 3 | 5 | 5 |

In other words, condition in Equation 1 is to be checked $R_{LUT}$ times, wherein $R_{LUT}$ is the number of rows of Table 2, i.e. number of the threshold combinations to be checked. These threshold combinations result in conditions connected with logical "OR" operator, i.e. disjunction is applied to Equation 1 resulting in concatenated condition of Equation 3 as follows:

$$(S_{\text{FLSC}} \geq S_{\text{thr}}[0]) \& \& (N_{\text{FLSC}} \geq N_{\text{thr}}[0]) \ || \ (S_{\text{FLSC}} \geq S_{\text{thr}}[1]) \& \& (N_{\text{FLSC}} \geq N_{\text{thr}}[1]) ||$$

$$(S_{\text{FLSC}} \geq S_{\text{thr}}[2]) \& \& (N_{\text{FLSC}} \geq N_{\text{thr}}[2]) \ || \ (S_{\text{FLSC}} \geq S_{\text{thr}}[3]) \& \& (N_{\text{FLSC}} \geq N_{\text{thr}}[3]). \quad \text{[Equation 3]}$$

Here, $S_{\text{thr}}[Idx_{LUT}]$ and $N_{\text{thr}}[Idx_{LUT}]$ are thresholds from the $Idx_{LUT}$ row of the Table 2, the concatenation with logical OR goes over all rows of Table 2. It is notes that the above table is only exemplary. In general, the Table may include more or less rows than four.

As can be seen in Equation 3, it is enough to meet at least one of the conditions corresponding to rows of Table 2.

According to a particular embodiment, the processing circuitry is further configured to embed a first sign value (positive or negative) with a first parity value and a second sign value (negative or positive respectively) with a second parity value. The first and second parity value may be even and odd or vice versa. The embedding may be performed by (i) determining whether the first function of the transform coefficients has a parity corresponding to the sign of the current coefficient; and (ii) if the first function does not have the parity corresponding to the sign of the current coefficient, modifying a value of one of said transform coefficients so that the first function of the transform coefficients has the parity corresponding to the sign of the current coefficient. For example, the selection of the coefficient to be modified, and/or whether the value of the coefficient is to be modified by increasing it or decreasing it, is done by RDO (rate-distortion optimization) or by minimizing distortion caused by the modification. In particular, the modification of the coefficient may be either increase by one or decrease by one. It is noted that if the first function already has the parity corresponding to the sign of the current coefficient, no modification is necessary.

It may be advantageous if the processing circuitry is further configured not to permit modification of the value of a transform coefficient in case the modified value would lead to a judgment result different from the judgment result for unmodified value. This rule is relevant if the judgment was applied on the basis of the modified value and ensure encoder and decoder compliancy.

As already shown above, in an exemplary implementation, the first function and/or the second function is a sum of absolute transform coefficient values, and/or the transform coefficients are quantized and the coefficient value threshold is zero. In principle, any coefficient in real implementation is always quantized, even in case no further lossy compression is applied. In this example it is meant that any quantization to compress the coefficients in a lossy manner is applied before but not after the sign hiding.

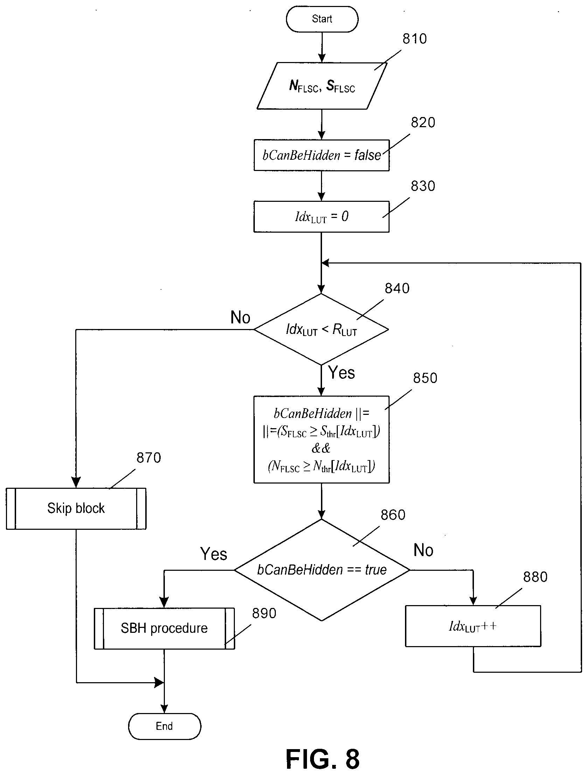

A flow-chart of this technique is shown in Figure 8. The processing starts for the given set of transform coefficients (also referred to simply as "coefficients" herein) with determining 810 of $S_{\text{FLSC}}$ which is the sum of magnitudes of non-zero quantized coefficients in the set and $N_{\text{FLSC}}$ which is the number of the non-zero quantized transform coefficients. Then, a Boolean variable *bCanBeHidden* is initialized 820 to the value FALSE. Moreover, the index to the look-up-table (for instance, Table 2 above) $Idx_{LUT}$ is initialized 830 to 0, corresponding to the first row of the look-up-table (LUT). As long as the index is lower than the number of rows of the LUT, next steps are performed. Otherwise, the set of coefficients (block, CC, CG, TU or the like) is skipped 870, which means that SBH is not applied thereto. The condition 840 assumes exemplarily indexing starting from zero. In case of indexing from one, the "<" in the condition 840 would be replace by smaller than or equal to.

If condition 840 is TRUE, the variable *bCanBeHidden* is updated 850 as follows:

$$bCanBeHidden = bCanBeHidden \ || \ (S_{\text{FLSC}} \geq S_{\text{thr}}[Idx_{LUT}]) \& \& (N_{\text{FLSC}} \geq N_{\text{thr}}[Idx_{LUT}])$$

If the updated variable *bCanBeHidden* is TRUE in step 860, SBH is performed 890 for the set of coefficients and the procedure stops. This is because it suffices for SBH to be performed that only one of the conditions built for different threshold combinations of the LUT is satisfied.

If *bCanBeHidden* is FALSE in step 860, the index is increased 880 and the testing continues by checking 840 whether or not the threshold value combinations of the entire table has already been tested, in other words, whether the index is equal or larger than the number $R_{LUT}$ of rows of the Table.

It is noted that in Table 1, the lower the number $N_{thr}$ of non-zero quantized transform coefficients contained in a CC, CG or a block (in general in the set of coefficients), the higher the sum $S_{thr}$ of quantized transform coefficient magnitudes should be. Values of $N_{thr}$ and $S_{thr}$ are used to represent the changes of distributions of quantized transform coefficient magnitudes within the set of coefficients (such as TU, CC, CG or in general a block). The closer an actual distribution is to uniform distribution, the more bits are needed and, therefore, the part of the signs which are entropy-coded in equally probable mode (in fact, 1 bin is coded as 1 bit in this mode) is smaller than as if an actual distribution would be closer to geometric one, in which less bits are required for coding of transform coefficient magnitudes due to better compression ratio. So, in the second case, the part of the signs which are entropy-coded in equally probable mode is larger. Hence, in the second case (uniform distribution), hiding provides a better RD trade-off than in the first case (geometric distribution).

In other words, according to an exemplary embodiment, in the plurality of combinations, with non-decreasing values of the number threshold, the values of the second function threshold are not increasing.

Moreover, in one exemplary implementation, the processing circuitry is further configured to access a memory in which the plurality of combinations of values of the second function threshold and the number thresholds are stored in lookup table. However, it is noted that the present disclosure is not limited thereto and the plurality of combinations of threshold values may also be generated from a function or obtained in another way.

As discussed above, the SBH (or any other parameter value embedding) can be performed for sets of coefficients with various different sizes and grouping types such as transform unit (a unit for which the transform is actually performed), a coefficient group (subblock/subunit of the transform unit), a coefficient chunk (a subset of coefficients in a serialized sequence of the transform unit) or - in general - any block of coefficient which may be also one or more of the transform units or a part of the transform unit. Moreover, according to an embodiment, the conditions for deciding whether or not SBH is to be applied may be applied at first to a smaller set of coefficients. If the conditions are not satisfied, they may be applied to a larger set of coefficients. Moreover, there may be further steps of increasing the set of coefficients and testing, whether or not the larger set satisfies the conditions. This approach may improve the coding rate and the distortion by finding the granularity of coefficient grouping which is efficient for application of the SBH.

For example, in the specific case of a TU split into a plurality of CCs or CGs, the conditions may at first be tested on the respective CCs or CGs. If they are not fulfilled, the conditions may be further tested on the TU. It is noted that the plural "conditions" in this context may also include one condition such as the one of Equation 1 or Equation 2, but may also include more conditions such as those defined by a LUT of Table 2 or the like.

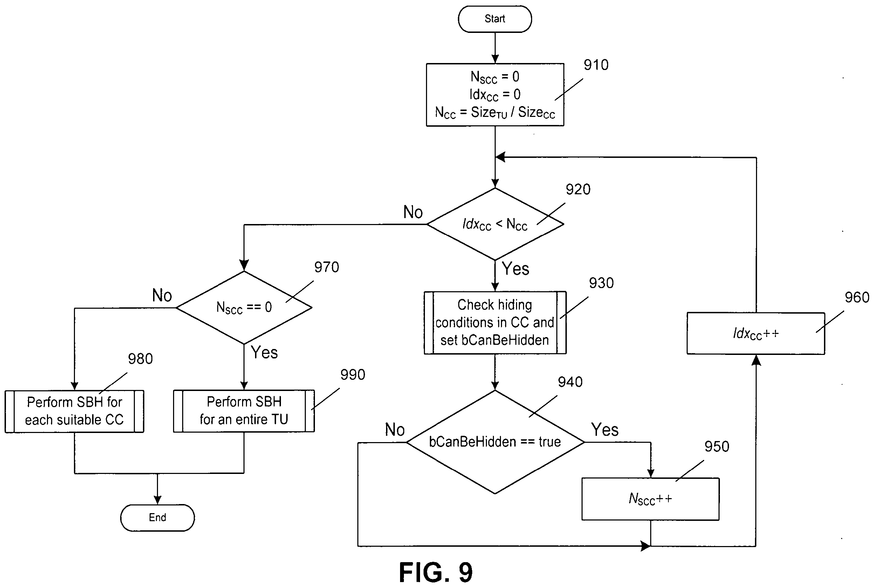

An example of such hierarchic SBH is illustrated in Figure 9. In summary, if no CCs / CGs suitable for SBH were found in a TU, hiding conditions (e.g. the conventional SBH hiding condition, Equation 1 or Equation 2, conditions of Table 2) are applied to an entire TU to check whether one sign per TU can be hidden there or not. It is noted that while the conditions to check application of SBH for the TU may be the same, the value of the threshold or threshold may differ from the value of threshold(s) used for evaluating CCs or CGs.

The procedure in Figure 9 starts with initializations 910. In the example of Figure 9, the coefficient chunks are evaluated. However, as described above. This approach can equally be applied to coefficient groups. The number $Ncc$ of chunks is the length $Size_{TU}$ of the scanned TU in number of coefficients divided by the length of a chunk $Size_{CC}$:

$$N_{CC} = Size_{TU} / Size_{CC}$$

In case the SBH is performed on CGs rather than chunks, the number of coefficient groups is also derived as the size of the TU divided by the size of the coefficient group.

Moreover, in step 910, the number of coefficient chunks to which the SBH is applied, $N_{SCC}$, is set to zero and the index over the coefficient chunks $Idx_{CC}$ is also set to zero.

The procedure is performed for all chunks, i.e. while the $Idx_{CC}$ is smaller than the number of chunks $Ncc$. Correspondingly, in step 920, it is tested whether there still is a chunk among the $Ncc$ chunks to be processed. If this is the case ("Yes" after step 920), the hiding conditions are checked in the current chunk identified by the chunk index $Idx_{CC}$ and the variable $bCanBeHidden$ is set to TRUE if the conditions are satisfied and set to FALSE if the conditions are not satisfied in step 930. In step 940 it is tested whether or not the variable $bCanBeHidden$ has been set in step 930 to TRUE or FALSE. If the variable $bCanBeHidden$ has been set to TRUE in step 930 ("Yes" after step 940), then the number $Nscc$ of CCs to which the SBH is applied is incremented by one in step 950 and the chunk index $Idx_{CC}$ is incremented by one in step 960. Then the processing returns to step 920, which means that the next chunk is to be tested on whether or not the SBH is to be applied thereto unless all chunks have been tested already. If, on the other hand, the variable $bCanBeHidden$ has not been set to TRUE (has been set to FALSE) in step 930 ("No" after step 940), then the number $N_{SCC}$ of CCs to which the SBH is applied is not incremented but the chunk index $Idx_{CC}$ is incremented by one in step 960. Then the processing returns, again, to step 920, which means that the next chunk is to be tested on whether or not the SBH is to be applied thereto unless all chunks have been tested already.

When all the chunks of the transform unit (TU) are processed ("No" in step 920, meaning that $Idx_{CC}$ is no longer smaller than $N_{CC}$), it is tested in step 970, whether or not there is at least one chunk among the Ncc chunks for which the SBH is to be applied. If $Nscc == 0$ in step 970 ("Yes" after step 970), it means that the $N_{SCC}$ has not been incremented in any of the runs through step 950 and thus, that there is not a single chunk in which SBH is applicable. In such case, the SBH processing is performed for the entire TU in step 990. If, on the other hand, $Nscc != 0$ in step 970 ("No" after step 970), it means that the Nscc has been incremented at least once in step 950 and thus, that there is at least one chunk to which SBH is to be applied. In such case, the SBH processing is performed for all chunks for which the conditions in step 930 were satisfied. The SBH for these chunks is performed in step 980.

It is noted that the example described above with reference to Figure 9 is only one of possible implementations of this embodiment. In particular, in this implementation, the conditions are tested for all chunks before the SBH is applied. However, after "Yes" in step 940, the SBH may also be applied to the current chunk (chunk with the current $Idx_{CC}$), either before or after step 950. Moreover, variable $N_{SCC}$ does not need to be a counter but may be a mere Boolean variable, which is initially set to FALSE (corresponding to zero initialization in step 910) and then set to TRUE instead of incrementing in step 950. As is clear to those skilled in the art, there may be other changes in the order of steps or their implementation details. Moreover, step 990 in this example includes application of SBH to the TU in any case. However, this is not necessarily the case. Step 990 may also include testing of hiding conditions for the entire TU and only applying SBH if these conditions (one or more conditions) are satisfied. The conditions may be the same or different from those applied to the CCs and CGs as described above. The conditions may also be the same but the thresholds may be different.

In general, for the purpose of multiple SBH, the processing circuitry is configured to split transform coefficients of a transform unit into a plurality of sets of transform coefficients and to perform the determination and the encoding according to the result of said determination for each of the plurality of sets of transform coefficient values.

In particular, in one exemplary implementation, the transform unit is a two-dimensional block of transform coefficients obtained by transforming an image signal, and the processing circuitry is configured to split the transform unit into a plurality of two dimensional blocks and to perform the determination and the encoding for each of the plurality of two dimensional blocks. The image signal to be transformed may be the residuals after predictive coding (i.e. prediction error signal). However, it may in general be also directly the image pixels / samples of one or more color components. The coefficients may be quantized. The blocks to which the TU is split may be square or rectangular. In one example, the blocks have the same size as illustrated in Figure 4. However, the blocks may also be a result of hierarchic splitting as illustrated in Figure 6.

Alternatively, the processing circuitry is further configured to:

- quantize the transform coefficients of the block;
- scan the transform coefficients of a block among the plurality of two dimensional blocks according to a predefined order,
- determine a first non-zero coefficient in the scanned transform coefficients of said block,
- determine whether or not the sign of said first non-zero coefficient is to be encoded in a result of the first function of transform coefficients in the block by evaluating the second function of the transform coefficient values in the block and a number of non-zero transform coefficients in the block, and
- embed the sign of the first non-zero coefficient according to the result of the determination.

In one exemplary implementation, the coefficients are quantized after transformation and the splitting and SBH is performed on the quantized coefficients. The quantization step causes that some small values of the coefficients will become zero. In this case, the coefficient value threshold may be set to zero. On the other hand, the present disclosure is not limited to such implementation. As is clear to those skilled in the art, the splitting may be performed before or after quantization. In principle, it is possible to perform the quantization also after the SBH application and/or after determining whether or not the SBH is to be applied to particular sets of coefficients. However, in such case, it may be reasonable to set the coefficient value threshold to a number higher than zero and to ensure that the quantization does not change the value of the first function (such as the parity of the sum of magnitudes).

As mentioned above, scanning is performed in order to serialize the two-dimensional block into a one dimensional coefficient value sequence. Moreover, the scanning order defines the ordering od the coefficients in the sequence and thus also identifies, which of the non-zero coefficients is the first in that order and last in that order. The scanning may be defined as any order of the coefficients. In some cases, the scanning is defined by a space-filling curve, i.e. by a continuous curve from the first scanned coefficient to the last scanned coefficient and going over all coefficients in the block such as a zig-zag curve (cf. Figure 5) or any other curve.

In other words, in an exemplary implementation, the transform unit is a two-dimensional block of transform coefficients obtained by transforming image signal. Moreover, the processing circuitry is configured to scan transform coefficients of the transform unit according to a predefined order and to split the scanned transform coefficients into a plurality of one dimensional chunks and to perform the determination and the encoding for each of the plurality of one dimensional chunks.

The processing circuitry may be further configured to:

- determine a first non-zero coefficient in a chunk,
- determine whether or not the sign of said first non-zero coefficient is to be encoded in a result of the first function of transform coefficients in the chunk by evaluating the second function of the transform coefficient values in the chunk and a number of non-zero transform coefficients in the chunk, and
- encode the sign of the first non-zero coefficient according to the result of the determination.

As can be seen, the operation of SBH may be performed on a set of coefficients which is coefficient group or a general block which is a subblock of a transformation block, or on a set of coefficients which is a coefficient chunk.

As have already been described with reference to Figure 9, in an embodiment, the processing circuitry is further configured to, when, according to the determination results, the embedding of the sign of the current transform coefficient for none of the plurality of sets of transform coefficient values is to be encoded in a result of the first function of the respective transform coefficients, perform the determination and the encoding for the transform unit.

Moreover, it is noted that the present disclosure also provides an apparatus for encoding a sign of a current transform coefficient of a signal comprising a processing circuitry which is configured to:

- split a first unit including a plurality of transformation coefficients into a plurality of sub-units;
- determine whether or not the sign of the current transform coefficient is to be embedded in result of a first function of transform coefficients in each of the sub-units by evaluating a second function of the transform coefficient values the respective sub-unit;
- when, according to the determination results, the sign of the current transform coefficient for none of the plurality of sub-units is determined to be embedded in a result of the first function of the respective transform coefficients, perform the determination and the embedding for the first unit;
- embed the sign of the current transform coefficient according to the result of the determination either to the sub-units or to the first unit.

In other words, irrespectively of the particular condition or conditions to be fulfilled for performing SBH in the set of coefficients, this embodiment enables application of SBH to a larger unit, if none of the smaller units did not satisfy that particular condition or conditions.

In accordance with the present embodiment, an apparatus for decoding a sign of a current transform coefficient of a signal is also provided, the apparatus comprising a processing circuitry which is configured to:

- determine whether or not the sign of the current transform coefficient is to be derived in result of a first function of transform coefficients in each of the sub-units by evaluating a second function of the transform coefficient values the respective sub-unit;
- when, according to the determination results, the sign of the current transform coefficient for none of the plurality of sub-units is determined to be derived in a result of the first function of the respective transform coefficients, perform the determination and the derivation for the first unit;
- derive the sign of the current transform coefficient according to the result of the determination either to the sub-units or to the first unit.

In other words, if no CC or CG suitable for SBH according to the predetermined criteria is found, an entire block (e.g., TU) is checked using predetermined criteria. If they are met, SBH is applied to the entire block.

The present disclosure relates to sign bit hiding which is applied in the quantization block 108 in Figure 1. Moreover, the extraction of the hidden sign bit is performed in block 210 of Figure 2 (and correspondingly also in block 110 of Figure 1). However, the present disclosure is not limited to the encoder and decoder exemplified in Figures 1 and 2 and may also be applied to any other encoder / decoder of image or video.

Note that this specification provides explanations for pictures (frames), but fields substitute as pictures in the case of an interlace picture signal.

Although embodiments of the invention have been primarily described based on video coding, it should be noted that embodiments of the encoder 100 and decoder 200 (and correspondingly the system 300) may also be configured for still picture processing or coding, i.e. the processing or coding of an individual picture independent of any preceding or consecutive picture as in video coding.

The person skilled in the art will understand that the "blocks" ("units") of the various figures (method and apparatus) represent or describe functionalities of embodiments of the invention (rather than necessarily individual "units" in hardware or software) and thus describe equally functions or features of apparatus embodiments as well as method embodiments (unit = step).

The terminology of "units" is merely used for illustrative purposes of the functionality of embodiments of the encoder/decoder and are not intended to limiting the disclosure.

In the several embodiments provided in the present application, it should be understood that the disclosed system, apparatus, and method may be implemented in other manners. For example, the described apparatus embodiment is merely exemplary. For example, the unit division is a merely logical function division and other divisions may be used in implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

Embodiments of the invention may further comprise an apparatus, e.g. encoder and/or decoder, which comprises a processing circuitry configured to perform any of the methods and/or processes described herein.

Embodiments of the encoder 100 and/or decoder 200 and other embodiments may be implemented as hardware, firmware, software or any combination thereof. For example, the functionality of the encoder/encoding or decoder/decoding may be performed by a processing circuitry with or without firmware or software, e.g. a processor, a microcontroller, a digital signal processor (DSP), a field programmable gate array (FPGA), an application-specific integrated circuit (ASIC), or the like.

The functionality of the encoder 100 (and corresponding encoding method 100) and/or decoder 200 (and corresponding decoding method 200) may be implemented by program instructions stored on a computer readable medium. The program instructions, when executed, cause a processing circuitry, computer, processor or the like, to perform the steps of the encoding and/or decoding methods. The computer readable medium can be any medium, including non-transitory storage media, on which the program is stored such as a Blu ray disc, DVD, CD, USB (flash) drive, hard disc, server storage available via a network, etc.

An embodiment of the invention comprises or is a computer program comprising program code for performing any of the methods described herein, when executed on a computer.

An embodiment of the invention comprises or is a computer readable non-transitory medium comprising a program code that, when executed by a processor, causes a computer system to perform any of the methods described herein.

Summarizing, the present disclosure relates to provision of a mechanism for deciding whether and/or for which set of transformation coefficients resulting from a transformation of some source signal a sign of a current transformation coefficient may be embedded into a value of a function of that set of transformation coefficients. In particular, the decision is based on a condition including evaluating a second function of the transform coefficient values in the set of transform coefficients and a number of those transform coefficients in the set which are larger than a coefficient value threshold. The corresponding decoder for is also provided.

## LIST OF REFERENCE SIGNS

Fig. 1

100　　Encoder

103　　Picture block

102　　Input (e.g. input port, input interface)

104　　Residual calculation [unit or step]

105　　Residual block

106 Transformation (e.g. additionally comprising scaling) [unit or step]

107 Transformed coefficients

108 Quantization [unit or step]

109 Quantized coefficients

110 Inverse quantization [unit or step]

111 De-quantized coefficients

112 Inverse transformation (e.g. additionally comprising scaling) [unit or step]

113 Inverse transformed block

114 Reconstruction [unit or step]

115 Reconstructed block

116 (Line) buffer [unit or step]

117 Reference samples

120 Loop filter [unit or step]

121 Filtered block

130 Decoded picture buffer (DPB) [unit or step]

142 Inter estimation (or inter picture estimation) [unit or step]

143 Inter estimation parameters (e.g. reference picture/reference picture index, motion vector/offset)

144 Inter prediction (or inter picture prediction) [unit or step]

145 Inter prediction block

152 Intra estimation (or intra picture estimation) [unit or step]

153 Intra prediction parameters (e.g. intra prediction mode)

154 Intra prediction (intra frame/picture prediction) [unit or step]

155 Intra prediction block

162 Mode selection [unit or step]

165 Prediction block (either inter prediction block 145 or intra prediction block 155)

170 Entropy encoding [unit or step]

171 Encoded picture data (e.g. bitstream)

172 Output (output port, output interface)

131 Decoded picture

Fig. 2

| 200 | Decoder |
| 171 | Encoded picture data (e.g. bitstream) |
| 202 | Input (port/interface) |
| 204 | Entropy decoding |
| 209 | Quantized coefficients |
| 210 | Inverse quantization |
| 211 | De-quantized coefficients |
| 212 | Inverse transformation (scaling) |
| 213 | Inverse transformed block |
| 214 | Reconstruction (unit) |
| 215 | Reconstructed block |
| 216 | (Line) buffer |
| 217 | Reference samples |
| 220 | Loop filter (in loop filter) |
| 221 | Filtered block |
| 230 | Decoded picture buffer (DPB) |
| 231 | Decoded picture |
| 232 | Output (port/interface) |
| 244 | Inter prediction (inter frame/picture prediction) |
| 245 | Inter prediction block |
| 254 | Intra prediction (intra frame/picture prediction) |
| 255 | Intra prediction block |
| 260 | Mode selection |
| 265 | Prediction block (inter prediction block 245 or intra prediction block 255) |

Fig. 3

| 300 | Coding system |
| 310 | Source device |
| 312 | Picture Source |
| 313 | (Raw) picture data |
| 314 | Pre-processor/Pre-processing unit |
| 315 | Pre-processed picture data |
| 318 | Communication unit/interface |
| 320 | Destination device |
| 322 | Communication unit/interface |
| 326 | Post-processor/Post-processing unit |
| 327 | Post-processed picture data |
| 328 | Display device/unit |
| 330 | transmitted/received/communicated (encoded) picture data |

Fig. 4

| 410 | Transform Unit |
| 420 | Coefficient Group |

**Claims**

1. An apparatus for encoding a sign of a current transform coefficient of a signal comprising a processing circuitry which is configured to:

determine (850) whether or not the sign of the current transform coefficient is to be embedded in result of a first function of transform coefficients in a set of transform coefficients by evaluating a second function of the transform coefficient values in the set of transform coefficients and a number of those transform coefficients in the set of transform coefficients which are larger than a coefficient value threshold;

wherein the first function is a parity corresponding to a modulo M operation, M being an integer equal to 2 or larger than 2, and wherein the second function is a sum of absolute values only of certain coefficients among the coefficients in the set of transform coefficients, corresponding to weighted sum of the coefficients from the set of transform coefficients with some weights equal to zero; and

embed (890) the sign of the current transform coefficient according to the result of the determination;

wherein the evaluating (850) of the second function of the transform coefficient values in the set of transform coefficients includes comparing the second function of said transform coefficient values with a second function threshold;

the evaluating of the number of those transform coefficients in the set of transform coefficients which are larger than the coefficient value threshold includes comparison of said number with a number threshold;

the evaluating (850) is performed for a plurality of combinations of values of the second function threshold and the number thresholds; and

the sign of the current transform coefficient is embedded (890) in a result of the first function of the transform coefficients if the evaluating is successful for at least one of the plurality of combinations and not embedded in the result of said first function of the transform coefficients otherwise, thereby including sets of coefficients among those for which sign embedding is allowed.

2. The apparatus according to claim 1, wherein in the plurality of combinations for non-decreasing values of the number threshold, the values of the second function threshold are not increasing.

3. The apparatus according to claim 1 or 2, wherein the processing circuitry is further configured to access a memory in which the plurality of combinations of values of the second function threshold and the number thresholds are stored in lookup table.

4. The apparatus according to any of claims 1 to 3, wherein the processing circuitry is configured to:

split transform coefficients of a transform unit into a plurality of sets of transform coefficients;
perform the determination and the encoding according to the result of said determination for each of the plurality of sets of transform coefficient values.

5. The apparatus according to claim 4, wherein

the transform unit is a two-dimensional block of transform coefficients obtained by transforming image signal, and
the processing circuitry is configured to split the transform unit (410) into a plurality of two dimensional blocks (420) and to perform the determination and the encoding for each of the plurality of two dimensional blocks.

6. The apparatus according to claim 5, wherein the processing circuitry is further configured to:

- quantize the transform coefficients of the block;
- scan the transform coefficients of a block among the plurality of two dimensional blocks according to a predefined order,
- determine a first non-zero coefficient in the scanned transform coefficients of said block,
- determine whether or not the sign of said first non-zero coefficient is to be encoded in a result of the first function of transform coefficients in the block by evaluating the second function of the transform coefficient values in the block and a number of non-zero transform coefficients in the block, and
- embed the sign of the first non-zero coefficient according to the result of the determination.

7. The apparatus according to claim 4, wherein

the transform unit (410) is a two-dimensional block of transform coefficients obtained by transforming an image signal, and
the processing circuitry is configured to scan transform coefficients of the transform unit according to a predefined order;
split the scanned transform coefficients into a plurality of one dimensional chunks (CC#0, CC#1) and to perform the determination and the encoding for each of the plurality of one dimensional chunks.

8. The apparatus according to claim 7, wherein the processing circuitry is further configured to:

   - determine a first non-zero coefficient in a chunk,
   - determine whether or not the sign of said first non-zero coefficient is to be encoded in a result of the first function of transform coefficients in the chunk by evaluating the second function of the transform coefficient values in the chunk and a number of non-zero transform coefficients in the chunk, and
   - encode the sign of the first non-zero coefficient according to the result of the determination.

9. The apparatus according to any of claims 4 to 8, wherein the processing circuitry is further configured to:
   when, according to the determination results, the encoding of the sign of the current transform coefficient for none of the plurality of sets (420; CC#1) of transform coefficient values is to be encoded in a result of the first function of the respective transform coefficients, perform the determination and the encoding for the transform unit (410).

10. The apparatus according to any of claims 1 to 9, wherein the processing circuitry is further configured:
    to encode a first sign value with a first parity value and a second sign value with a second parity value, wherein the encoding is performed by:

    - determining whether the first function of the transform coefficients has a parity corresponding to the sign of the current coefficient; and
    - if the first function does not have the parity corresponding to the sign of the current coefficient, modifying a value of one of said transform coefficients so that the first function of the transform coefficients has the parity corresponding to the sign of the current coefficient.

11. The apparatus according to claim 10, wherein the processing circuitry is further configured not to permit modification of the value of a transform coefficient in case the modified value would lead to a judgment result different from the judgment result for unmodified value.

12. The apparatus according to any of claims 1 to 11, wherein:

    the first function and/or the second function is a sum of absolute transform coefficient values, and/or
    the transform coefficients are quantized and the coefficient value threshold is zero.

13. Apparatus for decoding a sign of a current transform coefficient of a signal comprising a processing circuitry which is configured to:

    determine (850) whether or not the sign of the current transform coefficient is to be derived from a value of a first function of transform coefficients in a set of transform coefficients by evaluating a second function of the transform coefficient values in the set of transform coefficients and a number of those transform coefficients in the set of transform coefficients which are larger than a coefficient value threshold;
    wherein the first function is a parity corresponding to a modulo M operation, M being an integer equal to 2 or larger than 2, and wherein the second function is a sum of absolute values only of certain coefficients among the coefficients in the set of transform coefficients, corresponding to weighted sum of the coefficients from the set of transform coefficients with some weights equal to zero; and
    derive the sign of the current transform coefficient according to the result of the determination;
    wherein the evaluating of the second function of the transform coefficient values in the set of transform coefficients includes comparing the second function of said transform coefficient values with a second function threshold;
    the evaluating of the number of those transform coefficients in the set of transform coefficients which are larger than the coefficient value threshold includes comparison of said number with a number threshold;
    the evaluating is performed for a plurality of combinations of values of the second function threshold and the number thresholds; and
    the sign of the current transform coefficient is embedded (890) in a result of the first function of the transform coefficients if the evaluating is successful for at least one of the plurality of combinations and not embedded in the result of said first function of the transform coefficients otherwise, thereby including sets of coefficients among those for which sign embedding is allowed.

14. Method for encoding a sign of a current transform coefficient of a signal, the method comprising:

determining whether or not the sign of the current transform coefficient is to be embedded in result of a first function of transform coefficients in a set of transform coefficients by evaluating a second function of the transform coefficient values in the set of transform coefficients and a number of those transform coefficients in the set of transform coefficients which are larger than a coefficient value threshold;

wherein the first function is a parity corresponding to a modulo M operation, M being an integer equal to 2 or larger than 2, and wherein the second function is a sum of absolute values only of certain coefficients among the coefficients in the set of transform coefficients, corresponding to weighted sum of the coefficients from the set of transform coefficients with some weights equal to zero; and

embedding the sign of the current transform coefficient according to the result of the determination;

wherein the evaluating of the second function of the transform coefficient values in the set of transform coefficients includes comparing the second function of said transform coefficient values with a second function threshold;

the evaluating of the number of those transform coefficients in the set of transform coefficients which are larger than the coefficient value threshold includes comparison of said number with a number threshold;

the evaluating is performed for a plurality of combinations of values of the second function threshold and the number thresholds; and

the sign of the current transform coefficient is embedded (890) in a result of the first function of the transform coefficients if the evaluating is successful for at least one of the plurality of combinations and not embedded in the result of said first function of the transform coefficients otherwise, thereby including sets of coefficients among those for which sign embedding is allowed.

15. Method for decoding a sign of a current transform coefficient of a signal, the method comprising:

determining whether or not the sign of the current transform coefficient is to be derived from a value of a first function of transform coefficients in a set of transform coefficients by evaluating a second function of the transform coefficient values in the set of transform coefficients and a number of those transform coefficients in the set of transform coefficients which are larger than a coefficient value threshold;

wherein the first function is a parity corresponding to a modulo M operation, M being an integer equal to 2 or larger than 2, and wherein the second function is a sum of absolute values only of certain coefficients among the coefficients in the set of transform coefficients, corresponding to weighted sum of the coefficients from the set of transform coefficients with some weights equal to zero; and

deriving the sign of the current transform coefficient according to the result of the determination;

wherein the evaluating of the second function of the transform coefficient values in the set of transform coefficients includes comparing the second function of said transform coefficient values with a second function threshold;

the evaluating of the number of those transform coefficients in the set of transform coefficients which are larger than the coefficient value threshold includes comparison of said number with a number threshold;

the evaluating is performed for a plurality of combinations of values of the second function threshold and the number thresholds; and

the sign of the current transform coefficient is embedded (890) in a result of the first function of the transform coefficients if the evaluating is successful for at least one of the plurality of combinations and not embedded in the result of said first function of the transform coefficients otherwise, thereby including sets of coefficients among those for which sign embedding is allowed.

## Patentansprüche

1. Einrichtung zum Codieren eines Vorzeichens eines aktuellen Transformationskoeffizienten eines Signals, die eine Verarbeitungsschaltung umfasst, die konfiguriert ist zum:

Bestimmen (850), ob das Vorzeichen des aktuellen Transformationskoeffizienten in ein Ergebnis einer ersten Funktion von Transformationskoeffizienten in einem Satz von Transformationskoeffizienten einzubetten ist oder nicht, durch ein Auswerten einer zweiten Funktion der Transformationskoeffizientenwerte in dem Satz von Transformationskoeffizienten und einer Anzahl jener Transformationskoeffizienten in dem Satz von Transformationskoeffizienten, die größer als eine Koeffizientenwertschwelle sind; wobei die erste Funktion eine Parität, die einer Modulo-M-Operation entspricht, ist, wobei M eine ganze Zahl gleich 2 oder größer als 2 ist, und wobei die zweite Funktion eine Summe von Absolutwerten nur gewisser Koeffizienten unter den Koeffizienten in dem Satz von Transformationskoeffizienten, die einer gewichteten Summe der Koeffizienten von dem Satz von Transformationskoeffizienten entspricht, ist, wobei einige Gewichte gleich null sind; und

Einbetten (890) des Vorzeichens des aktuellen Transformationskoeffizienten gemäß dem Ergebnis der Bestimmung;

wobei das Auswerten (850) der zweiten Funktion der Transformationskoeffizientenwerte in dem Satz von Transformationskoeffizienten ein Vergleichen der zweiten Funktion der Transformationskoeffizientenwerte mit einer Schwelle der zweiten Funktion einschließt;

das Auswerten der Anzahl jener Transformationskoeffizienten in dem Satz von Transformationskoeffizienten, die größer als die Koeffizientenwertschwelle sind, einen Vergleich der Anzahl mit einer Anzahlschwelle einschließt;

das Auswerten (850) für eine Vielzahl von Kombinationen von Werten der Schwelle der zweiten Funktion und der Anzahlschwellen durchgeführt wird; und

das Vorzeichen des aktuellen Transformationskoeffizienten in ein Ergebnis der ersten Funktion der Transformationskoeffizienten eingebettet (890) wird, falls das Auswerten für mindestens eine der Vielzahl von Kombinationen erfolgreich ist, und andernfalls in das Ergebnis der ersten Funktion der Transformationskoeffizienten nicht eingebettet wird,

wobei dadurch Sätze von Koeffizienten unter jenen, für die ein Vorzeicheneinbetten zulässig ist, eingeschlossen werden.

2. Einrichtung nach Anspruch 1, wobei in der Vielzahl von Kombinationen für nicht abnehmende Werte der Anzahlschwelle die Werte der Schwelle der zweiten Funktion nicht zunehmen.

3. Einrichtung nach Anspruch 1 oder 2, wobei die Verarbeitungsschaltung ferner konfiguriert ist, um auf einen Speicher zuzugreifen, in dem die Vielzahl von Kombinationen von Werten der Schwelle der zweiten Funktion und der Anzahlschwellen in einer Nachschlagetabelle gespeichert sind.

4. Einrichtung nach einem der Ansprüche 1 bis 3, wobei die Verarbeitungsschaltung konfiguriert ist zum:

Aufteilen von Transformationskoeffizienten einer Transformationseinheit in eine Vielzahl von Sätzen von Transformationskoeffizienten;

Durchführen der Bestimmung und des Codierens gemäß dem Ergebnis der Bestimmung für jeden der Vielzahl von Sätzen von Transformationskoeffizientenwerten.

5. Einrichtung nach Anspruch 4, wobei

die Transformationseinheit ein zweidimensionaler Block von Transformationskoeffizienten, der durch ein Transformieren eines Bildsignals erhalten wird, ist und

die Verarbeitungsschaltung konfiguriert ist, um die Transformationseinheit (410) in eine Vielzahl von zweidimensionalen Blöcken (420) aufzuteilen und um die Bestimmung und das Codieren für jeden der Vielzahl von zweidimensionalen Blöcken durchzuführen.

6. Einrichtung nach Anspruch 5, wobei die Verarbeitungsschaltung ferner konfiguriert ist zum:

- Quantisieren der Transformationskoeffizienten des Blocks;
- Scannen der Transformationskoeffizienten eines Blocks unter der Vielzahl von zweidimensionalen Blöcken gemäß einer vordefinierten Ordnung,
- Bestimmen eines ersten von null verschiedenen Koeffizienten in den gescannten Transformationskoeffizienten des Blocks,
- Bestimmen, ob das Vorzeichen des ersten von null verschiedenen Koeffizienten in einem Ergebnis der ersten Funktion von Transformationskoeffizienten in dem Block zu codieren ist oder nicht, durch das Auswerten der zweiten Funktion der Transformationskoeffizientenwerte in dem Block und einer Anzahl von von null verschiedenen Transformationskoeffizienten in dem Block, und
- Einbetten des Vorzeichens des ersten von null verschiedenen Koeffizienten gemäß dem Ergebnis der Bestimmung.

7. Einrichtung nach Anspruch 4, wobei

die Transformationseinheit (410) ein zweidimensionaler Block von Transformationskoeffizienten, der durch das Transformieren eines Bildsignals erhalten wird, ist und

die Verarbeitungsschaltung konfiguriert ist, um Transformationskoeffizienten der Transformationseinheit gemäß einer vordefinierten Ordnung zu scannen;

die gescannten Transformationskoeffizienten in eine Vielzahl von eindimensionalen Chunks (CC#0, CC#1) aufzuteilen und um die Bestimmung und das Codieren für jeden der Vielzahl von eindimensionalen Chunks durchzuführen.

8. Einrichtung nach Anspruch 7, wobei die Verarbeitungsschaltung ferner konfiguriert ist zum:

   - Bestimmen eines ersten von null verschiedenen Koeffizienten in einem Chunk,
   - Bestimmen, ob das Vorzeichen des ersten von null verschiedenen Koeffizienten in einem Ergebnis der ersten Funktion von Transformationskoeffizienten in dem Chunk zu codieren ist oder nicht, durch das Auswerten der zweiten Funktion der Transformationskoeffizientenwerte in dem Chunk und einer Anzahl von von null verschiedenen Transformationskoeffizienten in dem Chunk, und
   - Codieren des Vorzeichens des ersten von null verschiedenen Koeffizienten gemäß dem Ergebnis der Bestimmung.

9. Einrichtung nach einem der Ansprüche 4 bis 8, wobei die Verarbeitungsschaltung ferner konfiguriert ist zum: wenn, gemäß den Bestimmungsergebnissen, das Codieren des Vorzeichens des aktuellen Transformationskoeffizienten für keinen der Vielzahl von Sätzen (420; CC#1) von Transformationskoeffizientenwerten in einem Ergebnis der ersten Funktion der jeweiligen Transformationskoeffizienten zu codieren ist, Durchführen der Bestimmung und des Codierens für die Transformationseinheit (410).

10. Einrichtung nach einem der Ansprüche 1 bis 9, wobei die Verarbeitungsschaltung ferner konfiguriert ist: zum Codieren eines ersten Vorzeichenwerts mit einem ersten Paritätswert und eines zweiten Vorzeichenwerts mit einem zweiten Paritätswert, wobei das Codieren durchgeführt wird durch:

    - Bestimmen, ob die erste Funktion der Transformationskoeffizienten eine Parität, die dem Vorzeichen des aktuellen Koeffizienten entspricht, aufweist; und
    - falls die erste Funktion nicht die Parität, die dem Vorzeichen des aktuellen Koeffizienten entspricht, aufweist, Ändern eines Wertes eines der Transformationskoeffizienten, sodass die erste Funktion der Transformationskoeffizienten die Parität, die dem Vorzeichen des aktuellen Koeffizienten entspricht, aufweist.

11. Einrichtung nach Anspruch 10, wobei die Verarbeitungsschaltung ferner konfiguriert ist, um eine Änderung des Werts eines Transformationskoeffizienten nicht zu erlauben, sofern der geänderte Wert zu einem Beurteilungsergebnis, das sich von dem Beurteilungsergebnis für einen unveränderten Wert unterscheidet, führen würde.

12. Einrichtung nach einem der Ansprüche 1 bis 11, wobei:

    die erste Funktion und/oder die zweite Funktion eine Summe von Absoluttransformationskoeffizientenwerten ist, und/oder
    die Transformationskoeffizienten quantisiert werden und die Koeffizientenwertschwelle null beträgt.

13. Einrichtung zum Decodieren eines Vorzeichens eines aktuellen Transformationskoeffizienten eines Signals, die eine Verarbeitungsschaltung umfasst, die konfiguriert ist zum:

    Bestimmen (850), ob das Vorzeichen des aktuellen Transformationskoeffizienten von einem Wert einer ersten Funktion von Transformationskoeffizienten in einem Satz von Transformationskoeffizienten abzuleiten ist oder nicht, durch das Auswerten einer zweiten Funktion der Transformationskoeffizientenwerte in dem Satz von Transformationskoeffizienten und einer Anzahl jener Transformationskoeffizienten in dem Satz von Transformationskoeffizienten, die größer als eine Koeffizientenwertschwelle sind; wobei die erste Funktion eine Parität, die einer Modulo-M-Operation entspricht, ist, wobei M eine ganze Zahl gleich 2 oder größer als 2 ist, und wobei die zweite Funktion eine Summe von Absolutwerten nur gewisser Koeffizienten unter den Koeffizienten in dem Satz von Transformationskoeffizienten, die der gewichteten Summe der Koeffizienten von dem Satz von Transformationskoeffizienten entspricht, ist, wobei einige Gewichte gleich null sind; und
    Ableiten des Vorzeichens des aktuellen Transformationskoeffizienten gemäß dem Ergebnis der Bestimmung; wobei das Auswerten der zweiten Funktion der Transformationskoeffizientenwerte in dem Satz von Transformationskoeffizienten das Vergleichen der zweiten Funktion der Transformationskoeffizientenwerte mit einer Schwelle der zweiten Funktion einschließt;
    das Auswerten der Anzahl jener Transformationskoeffizienten in dem Satz von Transformationskoeffizienten, die größer als die Koeffizientenwertschwelle sind, den Vergleich der Anzahl mit einer Anzahlschwelle einschließt;

das Auswerten für eine Vielzahl von Kombinationen von Werten der Schwelle der zweiten Funktion und der Anzahlschwellen durchgeführt wird; und

das Vorzeichen des aktuellen Transformationskoeffizienten in ein Ergebnis der ersten Funktion der Transformationskoeffizienten eingebettet (890) wird, falls das Auswerten für mindestens eine der Vielzahl von Kombinationen erfolgreich ist, und andernfalls in das Ergebnis der ersten Funktion der Transformationskoeffizienten nicht eingebettet wird,

wobei dadurch Sätze von Koeffizienten unter jenen, für die das Vorzeicheneinbetten zulässig ist, eingeschlossen werden.

**14.** Verfahren zum Codieren eines Vorzeichens eines aktuellen Transformationskoeffizienten eines Signals, wobei das Verfahren umfasst:

Bestimmen, ob das Vorzeichen des aktuellen Transformationskoeffizienten in das Ergebnis einer ersten Funktion von Transformationskoeffizienten in einem Satz von Transformationskoeffizienten einzubetten ist oder nicht, durch das Auswerten einer zweiten Funktion der Transformationskoeffizientenwerte in dem Satz von Transformationskoeffizienten und einer Anzahl jener Transformationskoeffizienten in dem Satz von Transformationskoeffizienten, die größer als eine Koeffizientenwertschwelle sind;

wobei die erste Funktion eine Parität, die einer Modulo-M-Operation entspricht, ist, wobei M eine ganze Zahl gleich 2 oder größer als 2 ist, und wobei die zweite Funktion eine Summe von Absolutwerten nur gewisser Koeffizienten unter den Koeffizienten in dem Satz von Transformationskoeffizienten, die der gewichteten Summe der Koeffizienten von dem Satz von Transformationskoeffizienten entspricht, ist, wobei einige Gewichte gleich null sind;

und

Einbetten des Vorzeichens des aktuellen Transformationskoeffizienten gemäß dem Ergebnis der Bestimmung;

wobei das Auswerten der zweiten Funktion der Transformationskoeffizientenwerte in dem Satz von Transformationskoeffizienten das Vergleichen der zweiten Funktion der Transformationskoeffizientenwerte mit einer Schwelle der zweiten Funktion einschließt;

das Auswerten der Anzahl jener Transformationskoeffizienten in dem Satz von Transformationskoeffizienten, die größer als die Koeffizientenwertschwelle sind, den Vergleich der Anzahl mit einer Anzahlschwelle einschließt;

das Auswerten für eine Vielzahl von Kombinationen von Werten der Schwelle der zweiten Funktion und der Anzahlschwellen durchgeführt wird; und

das Vorzeichen des aktuellen Transformationskoeffizienten in ein Ergebnis der ersten Funktion der Transformationskoeffizienten eingebettet (890) wird, falls das Auswerten für mindestens eine der Vielzahl von Kombinationen erfolgreich ist, und andernfalls in das Ergebnis der ersten Funktion der Transformationskoeffizienten nicht eingebettet wird,

wobei dadurch Sätze von Koeffizienten unter jenen, für die das Vorzeicheneinbetten zulässig ist, eingeschlossen werden.

**15.** Verfahren zum Decodieren eines Vorzeichens eines aktuellen Transformationskoeffizienten eines Signals, wobei das Verfahren umfasst:

Bestimmen, ob das Vorzeichen des aktuellen Transformationskoeffizienten von einem Wert einer ersten Funktion von Transformationskoeffizienten in einem Satz von Transformationskoeffizienten abzuleiten ist oder nicht, durch das Auswerten einer zweiten Funktion der Transformationskoeffizientenwerte in dem Satz von Transformationskoeffizienten und einer Anzahl jener Transformationskoeffizienten in dem Satz von Transformationskoeffizienten, die größer als eine Koeffizientenwertschwelle sind;

wobei die erste Funktion eine Parität, die einer Modulo-M-Operation entspricht, ist, wobei M eine ganze Zahl gleich 2 oder größer als 2 ist, und wobei die zweite Funktion eine Summe von Absolutwerten nur gewisser Koeffizienten unter den Koeffizienten in dem Satz von Transformationskoeffizienten, die der gewichteten Summe der Koeffizienten von dem Satz von Transformationskoeffizienten entspricht, ist, wobei einige Gewichte gleich null sind;

und

Ableiten des Vorzeichens des aktuellen Transformationskoeffizienten gemäß dem Ergebnis der Bestimmung;

wobei das Auswerten der zweiten Funktion der Transformationskoeffizientenwerte in dem Satz von Transformationskoeffizienten das Vergleichen der zweiten Funktion der Transformationskoeffizientenwerte mit einer Schwelle der zweiten Funktion einschließt;

das Auswerten der Anzahl jener Transformationskoeffizienten in dem Satz von Transformationskoeffizienten, die größer als die Koeffizientenwertschwelle sind, den Vergleich der Anzahl mit einer Anzahlschwelle einschließt;

das Auswerten für eine Vielzahl von Kombinationen von Werten der Schwelle der zweiten Funktion und der Anzahlschwellen durchgeführt wird; und

das Vorzeichen des aktuellen Transformationskoeffizienten in ein Ergebnis der ersten Funktion der Transformationskoeffizienten eingebettet (890) wird, falls das Auswerten für mindestens eine der Vielzahl von Kombinationen erfolgreich ist, und andernfalls in das Ergebnis der ersten Funktion der Transformationskoeffizienten nicht eingebettet wird,

wobei dadurch Sätze von Koeffizienten unter jenen, für die das Vorzeicheneinbetten zulässig ist, eingeschlossen werden.

**Revendications**

1.  Appareil permettant de coder un signe d'un coefficient de transformée actuel d'un signal comprenant une circuiterie de traitement qui est configurée pour :

    déterminer (850) si le signe du coefficient de transformée actuel doit ou non être intégré dans un résultat d'une première fonction de coefficients de transformée dans un ensemble de coefficients de transformée en évaluant une seconde fonction des valeurs de coefficients de transformée dans l'ensemble de coefficients de transformée et un nombre de ces coefficients de transformée dans l'ensemble de coefficients de transformée qui sont plus grands qu'un seuil de valeur de coefficient ;
    dans lequel la première fonction est une parité correspondant à une opération modulo M, M étant un nombre entier égal à 2 ou supérieur à 2, et dans lequel la seconde fonction est une somme de valeurs absolues uniquement de certains coefficients parmi les coefficients dans l'ensemble de coefficients de transformée, correspondant à la somme pondérée des coefficients de l'ensemble de coefficients de transformée avec certaines pondérations égales à zéro ;
    et
    intégrer (890) le signe du coefficient de transformée actuel selon le résultat de la détermination ;
    dans lequel l'évaluation (850) de la seconde fonction des valeurs de coefficients de transformée dans l'ensemble de coefficients de transformée comporte la comparaison de la seconde fonction desdites valeurs de coefficients de transformée avec un second seuil de fonction ;
    l'évaluation du nombre de ces coefficients de transformée dans l'ensemble de coefficients de transformée qui sont plus grands que le seuil de valeur de coefficient comporte la comparaison dudit nombre avec un seuil de nombre ;
    l'évaluation (850) est réalisée pour une pluralité de combinaisons de valeurs du second seuil de fonction et des seuils de nombre ; et
    le signe du coefficient de transformée actuel est intégré (890) dans un résultat de la première fonction des coefficients de transformée si l'évaluation est réussie pour au moins l'une parmi la pluralité de combinaisons et n'est pas intégré dans le résultat de ladite première fonction des coefficients de transformée dans le cas contraire, ce qui permet d'inclure des ensembles de coefficients parmi ceux pour lesquels l'intégration de signe est autorisée.

2.  Appareil selon la revendication 1, dans lequel dans la pluralité de combinaisons pour des valeurs non décroissantes du seuil de nombre, les valeurs du second seuil de fonction ne sont pas croissantes.

3.  Appareil selon la revendication 1 ou 2, dans lequel la circuiterie de traitement est en outre configurée pour accéder à une mémoire dans laquelle la pluralité de combinaisons de valeurs du second seuil de fonction et des seuils de nombre sont stockés dans une table de recherche.

4.  Appareil selon l'une quelconque des revendications 1 à 3, dans lequel la circuiterie de traitement est en outre configurée pour :

    diviser des coefficients de transformée d'une unité de transformée en une pluralité d'ensembles de coefficients de transformée ;
    réaliser la détermination et le codage selon le résultat de ladite détermination pour chacun de la pluralité d'ensembles de valeurs de coefficients de transformée.

5.  Appareil selon la revendication 4, dans lequel

l'unité de transformée est un bloc bidimensionnel de coefficients de transformée obtenus par transformée du signal d'image, et

la circuiterie de traitement est configurée pour diviser l'unité de transformée (410) en une pluralité de blocs bidimensionnels (420) et pour réaliser la détermination et le codage pour chacun de la pluralité de blocs bidimensionnels.

6. Appareil selon la revendication 5, dans lequel la circuiterie de traitement est en outre configurée pour :

- quantifier les coefficients de transformée du bloc ;
- balayer les coefficients de transformée d'un bloc parmi la pluralité de blocs bidimensionnels selon un ordre prédéfini,
- déterminer un premier coefficient non nul dans les coefficients de transformée balayés dudit bloc,
- déterminer si le signe dudit premier coefficient non nul doit ou non être codé dans un résultat de la première fonction de coefficients de transformée dans le bloc en évaluant la seconde fonction des valeurs de coefficients de transformée dans le bloc et un nombre de coefficients de transformée non nuls dans le bloc, et
- intégrer le signe du premier coefficient non nul selon le résultat de la détermination.

7. Appareil selon la revendication 4, dans lequel

l'unité de transformée (410) est un bloc bidimensionnel de coefficients de transformée obtenus par transformée d'un signal d'image, et

la circuiterie de traitement est configurée pour balayer des coefficients de transformée de l'unité de transformée selon un ordre prédéfini ;

diviser les coefficients de transformée balayés en une pluralité de segments unidimensionnels (CC#0, CC#1) et réaliser la détermination et le codage pour chacun de la pluralité de segments unidimensionnels.

8. Appareil selon la revendication 7, dans lequel la circuiterie de traitement est en outre configurée pour :

- déterminer un premier coefficient non nul dans un segment,
- déterminer si le signe dudit premier coefficient non nul doit ou non être codé dans un résultat de la première fonction de coefficients de transformée dans le segment en évaluant la seconde fonction des valeurs de coefficients de transformée dans le segment et un nombre de coefficients de transformée non nuls dans le segment, et
- coder le signe du premier coefficient non nul selon résultat de la détermination.

9. Appareil selon l'une quelconque des revendications 4 à 8, dans lequel la circuiterie de traitement est en outre configurée pour :
lorsque, selon les résultats de détermination, le codage du signe du coefficient de transformée actuel pour aucun de la pluralité d'ensembles (420 ; CC#1) de valeurs de coefficients de transformée doit être codé dans un résultat de la première fonction des coefficients de transformée respectifs, réaliser la détermination et le codage pour l'unité de transformée (410).

10. Appareil selon l'une quelconque des revendications 1 à 9, dans lequel la circuiterie de traitement est en outre configurée pour :
coder une première valeur de signe avec une première valeur de parité et une seconde valeur de signe avec une seconde valeur de parité, dans lequel le codage est réalisé par :

- le fait de déterminer si la première fonction des coefficients de transformée a une parité correspondant au signe du coefficient actuel ; et
- si la première fonction n'a pas la parité correspondant au signe du coefficient actuel, la modification d'une valeur d'un desdits coefficients de transformée, de sorte que la première fonction des coefficients de transformée a la parité correspondant au signe du coefficient actuel.

11. Appareil selon la revendication 10, dans lequel la circuiterie de traitement est en outre configurée pour ne pas autoriser de modification de la valeur d'un coefficient de transformée au cas où la valeur modifiée conduirait à un résultat de jugement différent du résultat de jugement pour la valeur non modifiée.

12. Appareil selon l'une quelconque des revendications 1 à 11, dans lequel :

la première fonction et/ou la seconde fonction est une somme de valeurs absolues de coefficients de transformée, et/ou

les coefficients de transformée sont quantifiés et le seuil de valeur de coefficient est nul.

13. Appareil permettant de décoder un signe d'un coefficient de transformée actuel d'un signal comprenant une circuiterie de traitement configurée pour :

déterminer (850) si le signe du coefficient de transformée actuel doit ou non être déduit d'une valeur d'une première fonction de coefficients de transformée dans un ensemble de coefficients de transformée en évaluant une seconde fonction des valeurs de coefficients de transformée dans l'ensemble de coefficients de transformée et un nombre de ces coefficients de transformée dans l'ensemble de coefficients de transformée qui sont plus grands qu'un seuil de valeur de coefficient ;

dans lequel la première fonction est une parité correspondant à une opération modulo M, M étant un nombre entier égal à 2 ou supérieur à 2, et dans lequel la seconde fonction est une somme de valeurs absolues uniquement de certains coefficients parmi les coefficients dans l'ensemble de coefficients de transformée, correspondant à la somme pondérée des coefficients de l'ensemble de coefficients de transformée avec certaines pondérations égales à zéro ;

et

déduire le signe du coefficient de transformée actuel selon le résultat de la détermination ;

dans lequel l'évaluation de la seconde fonction des valeurs de coefficients de transformée dans l'ensemble de coefficients de transformée comporte la comparaison de la seconde fonction desdites valeurs de coefficients de transformée à un second seuil de fonction ;

l'évaluation du nombre de ces coefficients de transformée dans l'ensemble de coefficients de transformée qui sont plus grands que le seuil de valeur de coefficient comporte la comparaison dudit nombre avec un seuil de nombre ;

l'évaluation est réalisée pour une pluralité de combinaisons de valeurs du second seuil de fonction et des seuils de nombre ; et

le signe du coefficient de transformée actuel est intégré (890) dans un résultat de la première fonction des coefficients de transformée si l'évaluation est réussie pour au moins l'une parmi la pluralité de combinaisons et n'est pas intégré dans le résultat de ladite première fonction des coefficients de transformée dans le cas contraire, ce qui permet d'inclure des ensembles de coefficients parmi ceux pour lesquels l'intégration de signe est autorisée.

14. Procédé permettant de coder un signe d'un coefficient de transformée actuel d'un signal, le procédé comprenant :

le fait de déterminer si le signe du coefficient de transformée actuel doit ou non être intégré dans un résultat d'une première fonction de coefficients de transformée dans un ensemble de coefficients de transformée en évaluant une seconde fonction des valeurs de coefficients de transformée dans l'ensemble de coefficients de transformée et un nombre de ces coefficients de transformée dans l'ensemble de coefficients de transformée qui sont plus grands qu'un seuil de valeur de coefficient ;

dans lequel la première fonction est une parité correspondant à une opération modulo M, M étant un nombre entier égal à 2 ou supérieur à 2, et dans lequel la seconde fonction est une somme de valeurs absolues uniquement de certains coefficients parmi les coefficients dans l'ensemble de coefficients de transformée, correspondant à la somme pondérée des coefficients de l'ensemble de coefficients de transformée avec certaines pondérations égales à zéro ;

et

l'intégration du signe du coefficient de transformée actuel selon le résultat de la détermination ;

dans lequel l'évaluation de la seconde fonction des valeurs de coefficients de transformée dans l'ensemble de coefficients de transformée comporte la comparaison de la seconde fonction desdites valeurs de coefficients de transformée avec un second seuil de fonction ;

l'évaluation du nombre de ces coefficients de transformée dans l'ensemble de coefficients de transformée qui sont plus grands que le seuil de valeur de coefficient comporte la comparaison dudit nombre avec un seuil de nombre ;

l'évaluation est réalisée pour une pluralité de combinaisons de valeurs du second seuil de fonction et des seuils de nombre ; et

le signe du coefficient de transformée actuel est intégré (890) dans un résultat de la première fonction des coefficients de transformée si l'évaluation est réussie pour au moins l'une parmi la pluralité de combinaisons et n'est pas intégré dans le résultat de ladite première fonction des coefficients de transformée dans le cas contraire, ce qui permet d'inclure des ensembles de coefficients parmi ceux pour lesquels l'intégration de signe est autorisée.

15. Procédé permettant de décoder un signe d'un coefficient de transformée actuel d'un signal, le procédé comprenant :

le fait de déterminer si le signe du coefficient de transformée actuel doit ou non être déduit d'une valeur d'une première fonction de coefficients de transformée dans un ensemble de coefficients de transformée en évaluant une seconde fonction des valeurs de coefficients de transformée dans l'ensemble de coefficients de transformée et un nombre de ces coefficients de transformée dans l'ensemble de coefficients de transformée qui sont plus grands qu'un seuil de valeur de coefficient ;
dans lequel la première fonction est une parité correspondant à une opération modulo M, M étant un nombre entier égal à 2 ou supérieur à 2, et dans lequel la seconde fonction est une somme de valeurs absolues uniquement de certains coefficients parmi les coefficients dans l'ensemble de coefficients de transformée, correspondant à la somme pondérée des coefficients de l'ensemble de coefficients de transformée avec certaines pondérations égales à zéro ;
et
la déduction du signe du coefficient de transformée actuel selon le résultat de la détermination ;
dans lequel l'évaluation de la seconde fonction des valeurs de coefficients de transformée dans l'ensemble de coefficients de transformée comporte la comparaison de la seconde fonction desdites valeurs de coefficients de transformée à un second seuil de fonction ;
l'évaluation du nombre de ces coefficients de transformée dans l'ensemble de coefficients de transformée qui sont plus grands que le seuil de valeur de coefficient comporte la comparaison dudit nombre à un seuil de nombre ;
l'évaluation est réalisée pour une pluralité de combinaisons de valeurs du second seuil de fonction et des seuils de nombre ; et
le signe du coefficient de transformée actuel est intégré (890) dans un résultat de la première fonction des coefficients de transformée si l'évaluation est réussie pour au moins l'une parmi la pluralité de combinaisons et n'est pas intégré dans le résultat de ladite première fonction des coefficients de transformée dans le cas contraire, ce qui permet d'inclure des ensembles de coefficients parmi ceux pour lesquels l'intégration de signe est autorisée.

FIG. 1

Encoder 100

FIG. 2

Decoder 200

**FIG. 3**

300

EP 3 738 309 B1

● The first non-zero quantized transform coefficient of a Coefficient Group (CG)

◉ The last non-zero quantized transform coefficient of a CG

**FIG. 4**

**Block after applying transform**

First non-zero quantized transform coefficient in a block

Last non-zero quantized transform coefficient in a block

**Steps to get a set of CCs from a 2D block in transform domain:**

1. Serialization (scanning transform coefficients using a space filling curve)

2. Separation of serialized transformed coefficients into groups (e.g., of equal size) that are called Coefficients Chunks (CCs)

**No spatial segmentation of transform coefficients in transform domain as done in HM/JEM**

**Block after applying quantization**

CC#0         CC#1    Last CC

## FIG. 5

EP 3 738 309 B1

Spatial partitioning

A combination of quad-trees and binary trees used for coding a spatial partitioning

## FIG. 6

Non-zero (significant) quantized transform coefficients

| 0 | 0 | -5 | 3 | 0 | 4 | -3 | -2 | 0 | 2 | 0 | 0 | 0 | 0 | 0 | 0 |

$S_{\mathrm{FLSC}} = 19, N_{\mathrm{FLSC}} = 6$

$S_{\mathrm{thr}} = 7, N_{\mathrm{thr}} = 3$

CC#0

$$\left( \left( S_{\mathrm{FLSC}} = 19 \right) \geq \left( S_{\mathrm{thr}} = 7 \right) \right) \& \&\left( \left( N_{\mathrm{FLSC}} = 6 \right) \geq \left( N_{\mathrm{thr}} = 3 \right) \right)$$

## FIG. 7

EP 3 738 309 B1

Start

810

$N_{FLSC}, S_{FLSC}$

820

$bCanBeHidden = false$

830

$Idx_{LUT} = 0$

840

$Idx_{LUT} < R_{LUT}$

No

Yes

850

$bCanBeHidden \mathrel{||}=$
$\mathrel{||}=(S_{FLSC} \geq S_{thr}[Idx_{LUT}])$
$\&\&$
$(N_{FLSC} \geq N_{thr}[Idx_{LUT}])$

870

Skip block

860

$bCanBeHidden == true$

Yes

No

880

$Idx_{LUT}{++}$

890

SBH procedure

End

**FIG. 8**

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130188725 A1

**Non-patent literature cited in the description**

- **G. CLARE et al.** Sign Data Hiding. *7. JCT-VC MEETING* (JCTVC-G271)
- **CLARE, F. HENRY** ; **J. JUNG**. Sign Data Hiding,. *7th JCT-VC meeting, Geneva, Switzerland*, November 2011
- **X. YU** ; **J. WANG** ; **D. HE** ; **G. MARTIN-COCHER** ; **S. CAMPBELL**. Multiple Sign Bits Hiding. *8th JCT-VC meeting, San Jose, USA*, February 2012